(19) **Europäisches Patentamt / European Patent Office / Office européen des brevets**

(11) **EP 4 730 849 A1**

(12) **EUROPEAN PATENT APPLICATION**
published in accordance with Art. 153(4) EPC

(43) Date of publication:
**22.04.2026 Bulletin 2026/17**

(21) Application number: **24845855.6**

(22) Date of filing: **04.07.2024**

(51) International Patent Classification (IPC):
*H04W 8/00* (2009.01)   *H04W 40/24* (2009.01)
*H04W 4/80* (2018.01)   *H04W 84/12* (2009.01)
*H04W 4/40* (2018.01)

(52) Cooperative Patent Classification (CPC):
**H04W 4/40; H04W 4/80; H04W 8/00; H04W 40/24; H04W 84/12**

(86) International application number:
**PCT/KR2024/009516**

(87) International publication number:
**WO 2025/023551 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **25.07.2023  KR 20230096546**
         **16.10.2023  KR 20230137904**

(71) Applicant: **Samsung Electronics Co., Ltd.**
**Suwon-si, Gyeonggi-do 16677 (KR)**

(72) Inventors:
- **KIM, Junsung**
  **Suwon-si, Gyeonggi-do 16677 (KR)**
- **JUNG, Buseop**
  **Suwon-si, Gyeonggi-do 16677 (KR)**
- **LEE, Soonho**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE FOR SEARCHING FOR EXTERNAL ELECTRONIC DEVICE, AND OPERATING METHOD THEREOF**

(57)   One embodiment of the present invention relates to an electronic device and a method for searching for an external electronic device. The electronic device comprises a communication circuit, a processor and a memory, wherein, when the memory is executed by the processor, the electronic device can: activate USD on the basis of the reception of first information related to the activation of NAN communication; perform a search related to an external electronic device for a designated period of time on the basis of the USD; and terminate the USD on the basis of the reception of information related to the termination of NAN search during the search related to the external electronic device. Other embodiments are also possible.

**EP 4 730 849 A1**

FIG. 7

700

START

701 IS INFORMATION RELATED TO NAN COMMUNICATION RECEIVED?

NO

YES

703 PERFORM NAN DISCOVERY BASED ON USD

705 IS INFORMATION RELATED TO NAN DISCOVERY TERMINATION RECEIVED?

NO

YES

709 IS NAN DISCOVERY TIMER TERMINATED?

NO

YES

707 TERMINATE NAN DISCOVERY

END

**Description**

[Technical Field]

An embodiment of the disclosure relates to an electronic device for searching for an external electronic device and an operating method thereof.

[Background Art]

Due to advances in information and communication technology and semiconductor technology, various electronic devices are being used. An electronic device may provide various types of proximity services utilizing low-power discovery technology. A proximity service may refer to a communication function in which electronic devices located nearby quickly exchange data through a proximity network. For example, the proximity service may include a low-power proximity service using a Bluetooth low energy (BLE) beacon, or a low-power proximity service based on a wireless local area network (WLAN)-based low-power short-range communication technology (e.g., neighbor awareness networking (NAN) and/or Wi-Fi aware) (hereinafter, referred to as "NAN").
A low-power proximity service based on NAN may refer to a communication function of configuring a proximity network dynamically changing according to movement of an electronic device and exchanging data. Electronic devices included in a cluster may transmit and/or receive a signal for discovery (e.g., a synchronization beacon) and a service discovery frame (SDF) for notification of the existence of the cluster and/or for synchronization in a synchronized time duration (or communication duration) (e.g., a discovery window (DW)). For example, a cluster may indicate a set of electronic devices configuring a proximity network.
The information described above may be provided as a related art for helping understanding of the disclosure. No assertion or determination is made as to whether any content described above could be applied as prior art related to the disclosure.

[Disclosure of Invention]

[Solution to Problem]

A low-power proximity service based on NAN may support unsynchronized service discovery (USD) to reduce a delay caused by synchronization (e.g., device discovery) between electronic devices when communication between the electronic devices is established.
When an electronic device performs USD, a synchronization process with an external electronic device is not performed beforehand, and therefore, the electronic device needs to maintain an active state of NAN communication for a designated time interval from a start time point of USD to discover the external electronic device. For example, when performing USD, based on a signal related to activation of NAN communication, the electronic device may maintain the active state of NAN communication for the designated time interval to discover an external electronic device. Even when the electronic device is not a node for performing data communication with the external electronic device, the electronic device needs to maintain the active state of NAN communication for the designated time interval, based on reception of the signal related to activation of NAN communication, and thus wireless resources (e.g., frequency resources and/or time resources) and power of the electronic device may be unnecessarily wasted.
An embodiment of the disclosure provides a device and a method for searching for an external electronic device by an electronic device.
The technical task to be achieved herein is not limited to that mentioned above, and other technical tasks that are not mentioned above may be clearly understood to a person having common knowledge in the technical field to which the disclosure belongs based on the description provided below.
According to an embodiment, an electronic device may include a communication circuit, a processor operatively connected to the communication circuit, and a memory operatively connected to the at least one processor. According to an embodiment, the memory may be configured to store instructions, when executed by the at least one processor, cause the electronic device to activate USD, based on reception of first information related to activation of NAN communication. According to an embodiment, the memory may be configured to store instructions, when executed by the at least one processor, cause the electronic device to perform discovery related to an external electronic device for a designated time period, based on the USD. According to an embodiment, the memory may be configured to store instructions, when executed by the at least one processor, cause the electronic device to terminate the USD, based on reception of information related to termination of NAN discovery during the discovery related to the external electronic device.
According to an embodiment, an operating method of an electronic device may include activating USD, based on reception of first information related to activation of NAN communication. According to an embodiment, the operating method of the electronic device may include performing discovery related to an external electronic device for a designated time period, based on the USD. According to an embodiment, the operating method of the electronic device may include terminating the USD, based on reception of information related to termination of NAN discovery during the discovery related to the external electronic device.

According to an embodiment, a non-transitory computer-readable storage medium (or computer program product) storing one or more programs may be described. According to an embodiment, the one or more programs may include instructions that, when executed by a processor of an electronic device, perform an operation of activating USD, based on reception of first information related to activation of NAN communication, an operation of performing discovery related to an external electronic device for a designated time period, based on the USD, and an operation of terminating the USD, based on reception of information related to termination of NAN discovery during the discovery related to the external electronic device.

According to an embodiment of the disclosure, the electronic device may, during NAN-based discovery (e.g., unsynchronized service discovery (USD)) of an external electronic device, receive information related to discovery termination from the external electronic device and, based on the reception, terminate the discovery of the external electronic device (e.g., terminate the USD), thereby reducing unnecessary consumption of wireless resources and power of the electronic device for the NAN-based discovery of the external electronic device.

According to an embodiment, the electronic device may, while performing NAN communication based on a first communication protocol and wireless LAN communication (e.g., connection to an AP) based on a second communication protocol, update (or change) scheduling of the wireless LAN communication based on the second communication protocol, based on termination (e.g., termination of USD) of discovery of an external electronic device according to reception of information related to discovery termination from the external electronic device, thereby improving the quality (e.g., quality of service (QoS)) of the wireless LAN communication based on the second communication protocol.

Various other effects identified directly or indirectly through this document may be provided.

Effects obtainable from embodiments of the disclosure are not limited to the above-mentioned effects, and other effects that are not mentioned herein may be clearly understood form the following description by those skilled in the art to which the embodiments of the disclosure pertain.

[Brief Description of Drawings]

In relation to the description of drawings, the same or similar elements may be indicated by the same or similar reference signs.

FIG. 1 is a block diagram of an electronic device in a network environment according to an embodiment.
FIG. 2 is a diagram illustrating a NAN cluster according to an embodiment.
FIG. 3 is a diagram illustrating a protocol for transmitting a signal of an electronic device included in a NAN cluster according to an embodiment.
FIG. 4 is a diagram illustrating an example of data transmission and/or reception in a NAN cluster according to an embodiment.
FIG. 5 is a block diagram of an electronic device for data communication according to an embodiment.
FIG. 6 is a flowchart for performing USD by an external electronic device according to an embodiment.
FIG. 7 is a flowchart for performing or terminating NAN discovery based on USD by an electronic device according to an embodiment.
FIG. 8 is a flowchart for performing USD by an electronic device according to an embodiment.
FIG. 9 is a flowchart for terminating USD by an electronic device, based on a NAN discovery list according to an embodiment.
FIG. 10 illustrates an example for terminating USD by an electronic device according to an embodiment.
FIG. 11 illustrates an example for terminating USD by an electronic device according to an embodiment.
FIG. 12 is a flowchart for updating scheduling related to a communication protocol different from that of NAN communication by an electronic device, based on termination of USD according to an embodiment.

[Mode for the Invention]

Hereinafter, various embodiments are described in detail with reference to the accompanying drawings.

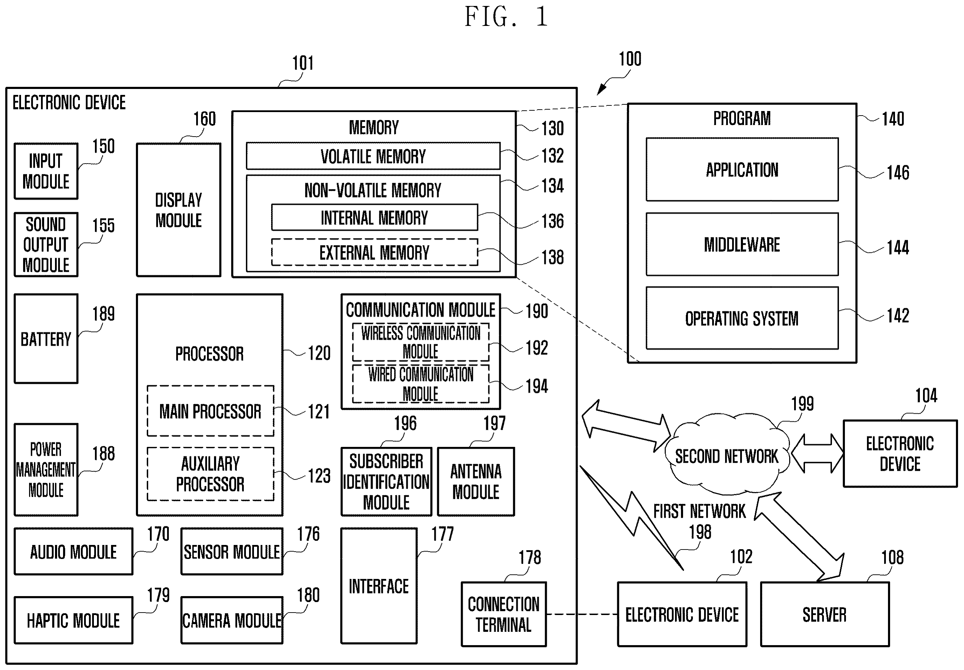

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules.

For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

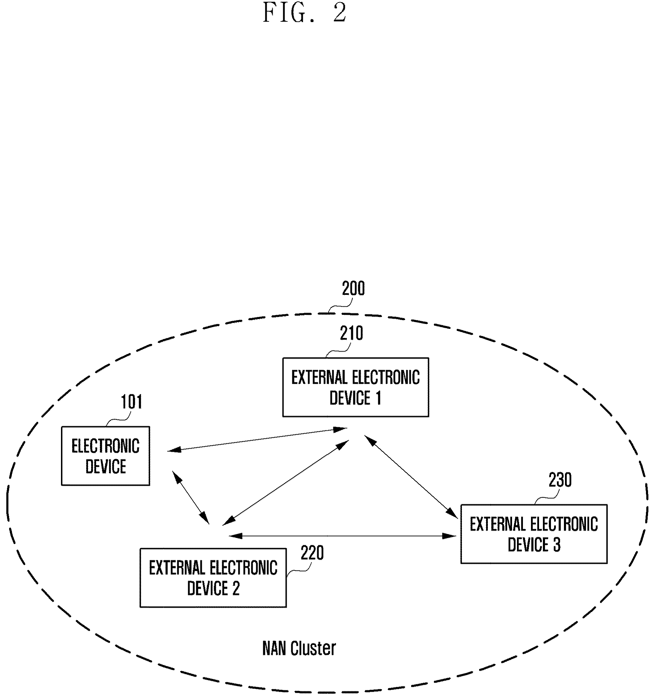

FIG. 2 is a diagram illustrating a neighbor awareness network (NAN) cluster according to various embodiments.

According to various embodiments, FIG. 2 is a diagram illustrating an example of the configuration of a NAN cluster 200 for a proximity network. According to one embodiment, the NAN cluster 200 may mean a set of electronic devices 101, 210, 220, and/or 230 that establish a proximity network so that the respective electronic device (or NAN devices) 101, 210, 220, and/or 230 can transmit and/or receive data to each other.

According to various embodiments, the NAN cluster 200 may include a plurality of electronic devices 101, 210, 220, and/or 230. The electronic devices 101, 210, 220 and/or 230 included in the NAN cluster 200 may transmit and/or receive a beacon (or discovery beacon), a service discovery frame (SDF), and/or a NAN action frame (NAF) within a synchronized time duration (or communication period) (e.g., a discovery window (DW)).

According to various embodiments, the electronic devices 101, 210, 220, and/or 230 within the NAN cluster 200 may have their time clocks synchronized with each other. For example, the electronic devices 101, 210, 220, and/or 230 may be synchronized to the time clock of one electronic device (e.g., the external electronic device 1 210), and transmit and/or receive a beacon, an SDF, and/or an NAF in the synchronized (or same) discovery window.

According to one embodiment, the external electronic device 1 210 supporting a low-power short-range communication technology based on NAN may broadcast a search signal (e.g., a beacon) to discover at least one of the electronic device 101 or the other external electronic devices 220, and/or 230 every predetermined first period (e.g., about 100 msec), and perform scanning every predetermined second period (e.g., about 10 msec) to receive the search signal broadcast from at least one of the electronic device 101 or the other external electronic devices 220, and/or 230.

According to one embodiment, the external electronic device 1 210 may detect at least one of the electronic device 101 or the other external electronic device 220 and/or 230 located around the external electronic device 210 based on the search signal received through scanning, and perform NAN cluster synchronization with the detected at least one of the electronic device 101 or the other external electronic device 220 and/or 230. The NAN cluster synchronization may include an operation of receiving time clock information of an electronic device (e.g., the external electronic device 210) representing a NAN cluster so that the electronic devices 101, 210, 220 and/or 230 included in the NAN cluster transmit and/or receive data on the same channel and/or during the same time.

According to one embodiment, each of the plurality of electronic devices 101, 210, 220 and/or 230 may form a single NAN cluster 200 that operates according to the synchronized time clock by transmitting a beacon and receiving a beacon from other electronic devices 101, 210, 220 and/or 230. The electronic devices 101, 210, 220 and/or 230 included in the NAN cluster 200 may perform NAN cluster synchronization (e.g., time and/or channel synchronization).

According to various embodiments, NAN cluster synchronization may be performed based on the time and channel of the electronic device (e.g., the external electronic device 1 210) with the highest master preference within the NAN cluster 200. For example, the electronic devices 101, 210, 220, and/or 230 included in the NAN cluster 200 formed through discovery may exchange signals related to master preference information indicating a preference for operating as an anchor master device. The electronic devices 101, 210, 220, and/or 230 included in the NAN cluster 200 may determine the electronic device (e.g., the external electronic device 1 210) with the highest master preference as an anchor master device (or a master electronic device) through the signals related to the master preference information.

According to various embodiments, the anchor master device (e.g., the external electronic device 1 210) may mean an electronic device that serves as a reference for time and channel synchronization of the electronic devices 101, 210, 220, and/or 230 included in the NAN cluster 200. The anchor master device may be changed according to the master preference of the electronic devices 101, 210, 220, and/or 230. Each of the time and channel synchronized electronic devices 101, 210, 220, and/or 230 may transmit a beacon and/or an SDF within a discovery window (or a search period) that is repeated according to a predetermined cycle, and receive the beacon and the SDF from the other electronic devices 101, 210, 220, and/or 230 within the NAN cluster 200. In one embodiment, the beacon may be transmitted and/or received periodically every discovery window to continuously maintain time and channel synchronization of the electronic devices 101, 210, 220, and/or 230 within the NAN cluster 200. The SDF may be transmitted and/or received within the discovery window as needed to provide services to the discovered electronic devices 101, 210, 220, and/or 230. According to one embodiment, among the time and channel synchronized electronic devices 101, 210, 220, and/or 230, the electronic device (e.g., the external electronic device 1 210) operating as the anchor master device may transmit a beacon (e.g., discovery beacon) during the interval between the discovery windows to detect new electronic devices.

According to one embodiment, each of the NAN cluster-synchronized (e.g., time and/or channel-synchronized) electronic devices 101, 210, 220, and/or 230 may transmit a NAN action frame (NAF) and receive NAFs from other electronic devices 101, 210, 220, and/or 230 within the NAN cluster 200 during a discovery window (or search interval) that repeats according to a predetermined cycle. For example, the NAF may include at least one of information related to configuring of a NAN data path (NDP), information related to scheduling update, or information related to NAN ranging to perform data communication in the interval between the discovery windows. For example, the NAF may control scheduling of wireless resources for coexistence of NAN operation and non-NAN operation (e.g., Wi-Fi Direct, mesh, IBSS, WLAN, Bluetooth, or NFC). The NAF may include time and/or channel information available for NAN communication.

According to various embodiments, each of the electronic devices 101, 210, 220, and/or 230 included in the NAN cluster 200 may operate in an active state only during the discovery window, and operate in a low-power state (e.g., a sleep state) during the remaining interval other than the discovery window, thereby reducing current consumption.

According to one embodiment, the discovery window is a period (e.g., in milliseconds) during which the electronic device 101, 210, 220, or 230 enters an active (or wake-up) state, consuming a significant amount of power. However, in the interval other than the discovery window, the electronic device 101, 210, 220, or 230 remains in a sleep state, enabling low-power discovery.

According to various embodiments, the electronic devices 101, 210, 220 and/or 230 included in the NAN cluster 200 may be simultaneously activated at the start time of the synchronized discovery window (e.g., DW start) and simultaneously transition to a sleep state at the end time of the discovery window (e.g., DW end).

According to various embodiments, each of the electronic devices 101, 210, 220, and/or 230 included in the NAN cluster 200 may transmit and/or receive data not only in the discovery window but also in the interval between the discovery windows. According to one embodiment, the electronic devices 101, 210, 220, and/or 230 included in the NAN cluster 200 may perform additional communication by configuring an active time slot in the interval between the discovery windows. For example, electronic devices 101, 210, 220 and/or 230 included in the NAN cluster 200 may transmit and/or receive SDFs that were not transmitted and/or received within the discovery window, through the active time slot. For example, the electronic devices 101, 210, 220 and/or 230 included in the NAN cluster 200 may perform NAN communication and/or non-NAN communication during the active time slot by configuring (or designating) a NAN communication operation period and/or a non-NAN communication operation period during the active time slot.

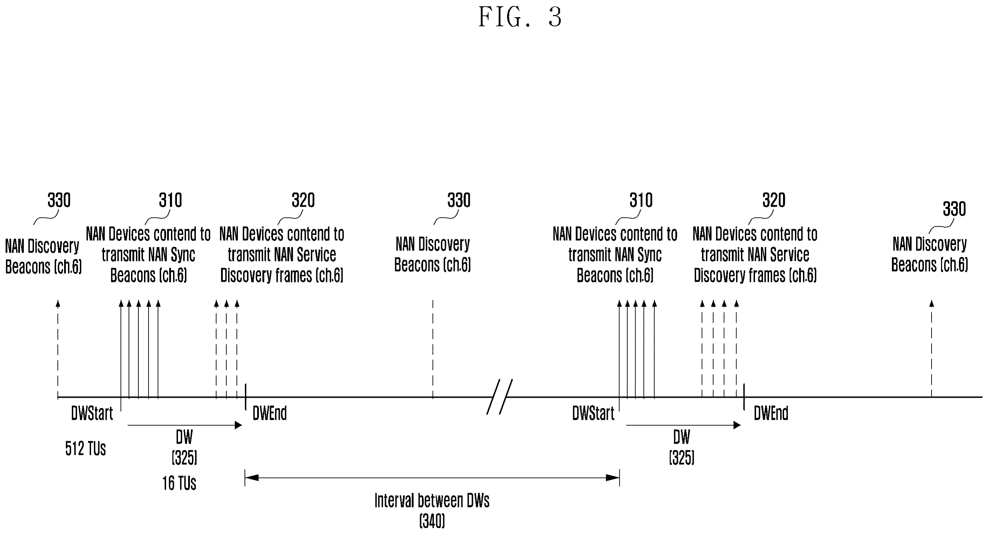

According to various embodiments, the electronic devices 101, 210, 220, and/or 230 included in the NAN cluster 200 may perform discovery, synchronization, and/or data exchange operations using a protocol illustrated in FIG. 3 described below.

FIG. 3 is a diagram illustrating a protocol for transmitting signals of an electronic device included in a NAN cluster according to various embodiments. According to various embodiments, FIG. 3 is a diagram illustrating an example of a discovery window. In FIG. 3, it may be illustrated that electronic devices (e.g., the electronic devices 101, 210, 220, and/or 230 of FIG. 2) included in one NAN cluster (e.g., the NAN cluster 200 of FIG. 2) transmit signals through a specific channel (e.g., channel 6 (Ch6)) based on a NAN standard.

According to various embodiments, the electronic devices 101, 210, 220 and/or 230 included in one NAN cluster (e.g., the NAN cluster 200 of FIG. 2) may transmit a sync beacon 310 and an SDF 320 in a synchronized discovery window 325. A discovery beacon 330 may be transmitted by at least one electronic device 101, 210, 220 and/or 230 in another interval 340 (e.g., an interval between discovery windows) other than the discovery window 325. According to one embodiment, the electronic devices 101, 210, 220 and/or 230 may transmit the sync beacon 310 and the SDF 320 on a contention basis. For example, the sync beacon 310 and the SDF 320 may be transmitted on the contention basis between the respective electronic devices 101, 210, 220 and/or 230 belonging to a NAN cluster (e.g., the NAN cluster 200 of FIG. 2).

According to various embodiments, the electronic devices 101, 210, 220, and/or 230 included in one NAN cluster (e.g., the NAN cluster (200) of FIG. 2) may transmit and/or receive NAFs in the discovery window 325. For example, the NAF may include at least one of information related to configuring of a NAN data path (NDP), information related to scheduling update, or information related to NAN ranging to perform data communication in the interval between the discovery windows.

According to various embodiments, the discovery window 325 may be a period during which the electronic devices 101, 210, 220, and/or 230 is activated from communication idle state (e.g., a sleep state) that is a power-saving mode, to communication state (e.g., a wake-up state) for the purpose of data exchange between the electronic devices 101, 210, 220, and/or 230. For example, the discovery window 325 may be divided into time units (TUs) which are millisecond units. According to one embodiment, the discovery window 325 for transmitting and receiving the sync beacon 310 and the SDF 320 may occupy 16 time units (16 TUs) and may have a cycle (or interval) that repeats with 512 time units (512 TUs).

According to various embodiments, the discovery beacon 330 may represent a signal transmitted so that other electronic devices that have not joined the NAN cluster (e.g., the NAN cluster 200 of FIG. 2) can discover the NAN cluster. For example, the discovery beacon 330 is a signal for notifying the existence of the NAN cluster, and the electronic devices that have not joined the NAN cluster may perform passive scanning to receive the discovery beacon 330, thereby discovering and joining the NAN cluster.

According to various embodiments, the discovery beacon 330 may include information necessary to synchronize with the NAN cluster (e.g., the NAN cluster 200 of FIG. 2). For example, the discovery beacon 330 may include at least one of a frame control (FC) field indicating the function of a signal (e.g., a beacon), a broadcast address, a media access control (MAC) address of a transmission electronic device, a cluster identifier (ID), a sequence control field, a time stamp for a beacon frame, a beacon interval indicating a transmission interval of the discovery beacon 330, or capability information about an electronic device transmitting the discovery beacon 330.

According to various embodiments, the discovery beacon 330 may include at least one proximity network (or NAN cluster) related information element. In one embodiment, the proximity network-related information may be referred to as attribute information.

According to various embodiments, the sync beacon 310 may indicate a signal for maintaining synchronization between the sync electronic devices 101, 210, 220, and/or 230 within the NAN cluster (e.g., the NAN cluster 200 of FIG. 2). The sync beacon 310 may be transmitted by the sync device among the electronic devices 1101, 210, 220, and/or 230 within the NAN cluster. For example, the sync device may include an anchor master device, a master device, or a non-master sync device defined in the NAN standard.

According to various embodiments, the sync beacon 310 may include information necessary for the electronic devices 101, 210, 220, and/or 230 to be synchronized within the NAN cluster (e.g., the NAN cluster 200 of FIG. 2). For example, the sync beacon 310 may include at least one of an FC field indicating the function of a signal (e.g., a beacon), a broadcast address, a MAC address of a transmission electronic device, a cluster ID, a sequence control field, a timestamp for a beacon frame, a beacon interval indicating the interval between the start points of the discovery windows 325, or capability information for a transmission electronic device. According to one embodiment, the sync beacon 310 may include at least one proximity network (or NAN cluster) related information element. For example, the proximity network-related information may include contents for a service provided through the proximity network.

According to various embodiments, the SDF 320 may represent a signal for exchanging data through the proximity network. According to one embodiment, the SDF 320 represents a vendor specific public action frame and may include various fields. For example, the SDF 320 may include a category or action field and include at least one piece of proximity network-related information.

According to various embodiments, the sync beacon 310, the SDF 320, and the discovery beacon 330 may include proximity network-related information. In one embodiment, the proximity network-related information may include an ID indicating a type of information, a length of the information, and a body field that is the corresponding information. According to one embodiment, the corresponding information may include at least one piece of master indication information, cluster information, service ID list information, service descriptor information, connection capability information, wireless LAN infrastructure information, peer to peer (P2P) operation information, independent basic service set (IBSS) information, mesh information, further proximity network service discovery information, further availability map information, country code information, ranging information, cluster discovery information, or vendor specific information.

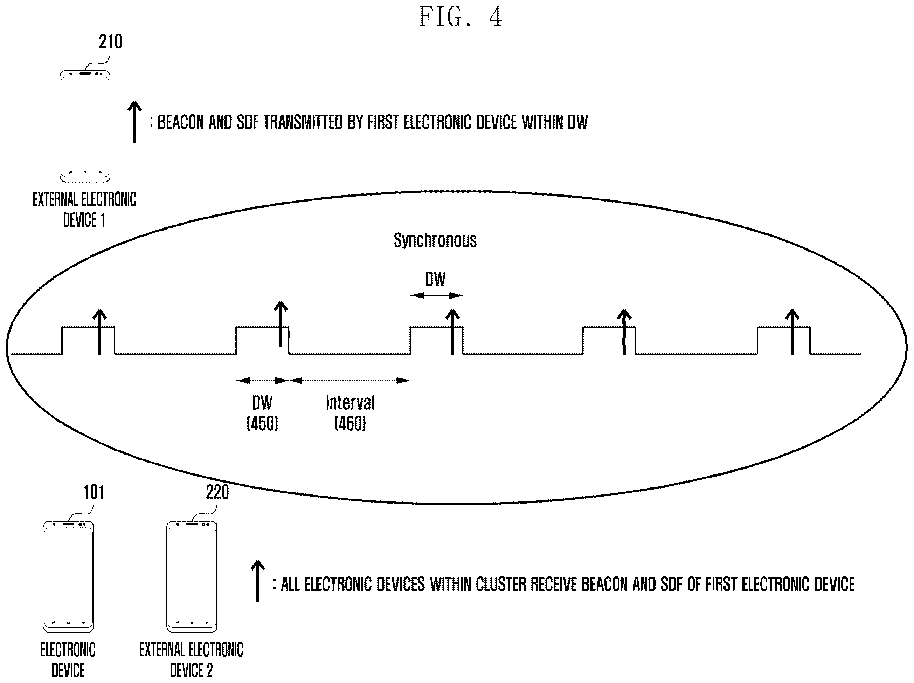

FIG. 4 is a diagram illustrating an example of data transmission and/or reception within a NAN cluster according to various embodiments.

According to various embodiments, FIG. 4 illustrates an example in which an electronic device 101, an external electronic device 1 210, and an external electronic device 2 220 form a single NAN cluster (e.g., the NAN cluster 200 of FIG. 2) through a wireless short-range communication technology, and each of the electronic devices 101, 210, and/or 220 may transmit and/or receive a beacon, an SDF, and/or an NAF to each other. According to one embodiment, FIG. 4 illustrates an example in which the external electronic device 1 210 among the electronic devices 101, 210, and/or 220 forming the NAN cluster performs the role of a master electronic device.

According to various embodiments, the external electronic device 1 210 may transmit a beacon, an SDF, and/or an NAF within a discovery window 450. The external electronic device 1 210 may broadcast the beacon, the SDF, and/or the NAF every discovery window 450 that is repeated every predetermined interval (e.g., interval 460).

According to various embodiments, the electronic device 101 and the external electronic device 2 220 may receive the beacon, the SDF, and/or the NAF transmitted by the external electronic device 1 210. According to one embodiment, each of the electronic device 101 and the external electronic device 2 220 may receive the broadcast beacon, the SDF, and/or the NAF from the external electronic device 1 210 every discovery window 450.

According to various embodiments, the beacon transmitted within the discovery window 450 may include a sync beacon and include information for maintaining synchronization between the electronic devices 101, 210, and/or 220. For example, at least one of the electronic device 101 or the external electronic device 2 220 may perform NAN cluster synchronization based on time clock information of the external electronic device 1 210 included in the beacon transmitted by the external electronic device 1 210 operating as a master. The at least one of the electronic device 101 or the external electronic device 2 220 may be synchronized based on the time clock information of the external electronic device 1 210, so that the discovery window 450 may be activated at the same time.

According to various embodiments, in an interval other than the discovery window 450 (e.g., interval 460), the electronic devices 101, 210, and/or 220 may maintain communication idle state (e.g., a sleep state) to reduce current consumption. According to one embodiment, the electronic devices 101, 210, and/or 220 may operate in communication state (e.g., a wake state) only in the discovery window 450 based on a synchronized time clock to reduce current consumption.

According to various embodiments, in the interval other than the discovery window 450 (e.g., interval 460), the electronic devices 101, 210 and/or 220 may perform additional communication by configuring an active time slot. According to one embodiment, the electronic devices 101, 210 and/or 220 may transmit and/or receive SDFs that were not transmitted and/or received within the discovery window 450 through the active time slot. According to one embodiment, the electronic devices 101, 210 and/or 220 may perform a connection using legacy Wi-Fi or discovery operation through the active time slot by designating an operation for Wi-Fi Direct, mesh, IBSS, WLAN, Bluetooth or NFC connection in the active time slot.

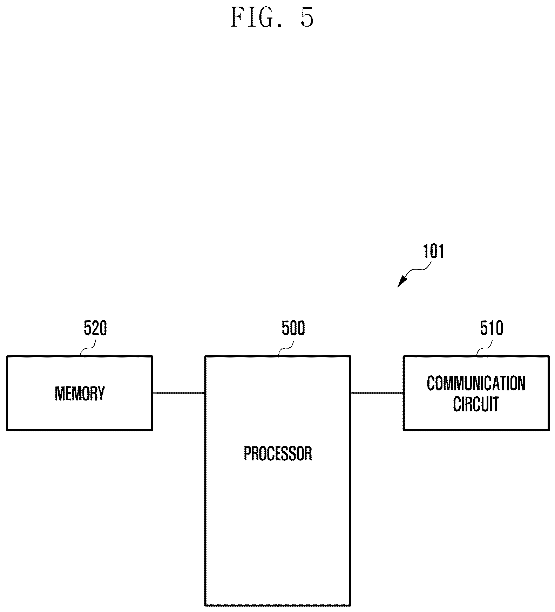

FIG. 5 is a block diagram of an electronic device for data communication according to an embodiment. According to an embodiment, an electronic device 101 illustrated in FIG. 5 may be at least partially similar to the electronic device 101 in FIG. 1, FIG. 2, FIG. 3, or FIG. 4, or may include other embodiments of the electronic device.

According to an embodiment referring to FIG. 5, the electronic device 101 may include a processor 500, a communication circuit 510, and/or a memory 520. For example, the processor 500 may be substantially identical to the processor 120 (e.g., an application processor and/or a communication processor) in FIG. 1, or may be included in the processor 120. The communication circuit 510 may be substantially identical to the wireless communication module 192 in FIG. 1, or may be included in the wireless communication module 192. The memory 520 may be substantially identical to the memory 130 in FIG. 1, or may be included in the memory 130. For example, the processor 500 may include at least one of an application processor or a communication processor.

According to an embodiment, the processor 500 may be operatively, functionally, and/or electrically connected to the communication circuit 510 and/or the memory 520. For example, the processor 500 may include at least one processor including processing circuitry.

According to an embodiment, the communication circuit 510 may include various circuitry structures used for modulation and/or demodulation of a signal in the electronic device 101. For example, the communication circuit 510 may modulate a baseband signal into a signal of a radio frequency (RF) band to output same through an antenna (not illustrated), or may demodulate (or decode) a signal of an RF band received through the antenna into a baseband signal and transmit same to the processor 500. For example, the communication circuit 510 may perform at least one of transmission or reception of various data with an external electronic device (e.g., the external electronic devices 210, 220, and/or 230 of FIG. 2) through a frequency band (e.g., about 2.4 GHz band, about 5 GHz band, and/or about 6 GHz band) used for NAN communication.

According to an embodiment, the processor 500 may control the communication circuit 510 to perform NAN communication. For example, when information (e.g., NAN discovery request information) related to NAN communication is received through at least one of an out-of-band (OOB) scheme, a third-layer discovery protocol scheme related to universal plug and play (uPnP) or multicast domain name system (mDNS), a cloud server request scheme, or a wireless LAN discovery scheme, the processor 500 may control the communication circuit 510 to perform NAN communication. For example, the OOB scheme may include a series of operations of transmitting or receiving information related to NAN communication through a second communication scheme different from a first communication scheme based on NAN. In an example, the second communication scheme may include at least one of Bluetooth, Bluetooth low energy (BLE), near field communication (NFC), quick response (QR), or a wireless LAN (e.g., Wi-Fi). In an example, the third-layer discovery protocol scheme may include a series of operations of transmitting or receiving information related to NAN communication through an access point (AP) to which the electronic device is connected through communication. In an example, the cloud server request scheme may include a series of operations of transmitting or receiving information related to NAN communication through a cloud server accessed by the electronic device. In an example, the wireless LAN discovery scheme may include a series of operations of transmitting or receiving information related to NAN communication through wireless LAN communication of a designated scheme (e.g., Wi-Fi, Wi-Fi direct, or NAN).

For example, the processor 500 may control the communication circuit 510 to perform unsynchronized service discovery (USD), based on at least one of USD indication information, information related to an external electronic device, or information related to an application program executed in the external electronic device, which is included in information related to NAN communication. In an example, the USD may include a series of operations of continuously discovering (e.g., NAN discovery) an external electronic device through NAN communication for a designated time (e.g., about 60 seconds) without performing synchronization with the external electronic device. In an example, the information related to the external electronic device may include identification information of the external electronic device. In an example, the information related to the application program may include at least one of identification information of the application program or information related to a function or service provided through the application program.

According to an embodiment, the processor 500 may update a NAN discovery list, based on activation (or performance) of USD. For example, the updating of the NAN discovery list may include a series of operations of adding identification information of an external electronic device included in information related to NAN communication to the NAN discovery list. In an example, the NAN discovery list may include information on at least one external electronic device that has requested the electronic device 101 to perform USD.

According to an embodiment, the processor 500 may, when performing USD (or NAN discovery based on USD), control the communication circuit 510 so that NAN communication is continuously activated for a designated time. For example, the designated time may be configured based on an operation time of a timer operated with reference to at least one of a reception time point of information related to NAN communication, an activation time point of USD, or a performance time point of USD. For example, when information related to NAN communication is received from multiple external electronic devices, the designated time may be configured based on an operation time of a timer operated (or reset) with reference to a reception time point of information related to NAN communication that is last received from the multiple external electronic devices.

According to an embodiment, the processor 500 may, when performing USD, control the communication circuit 510 to provide wireless LAN communication different from NAN communication and NAN communication concurrently. For example, the processor 500 may perform NAN communication (e.g., USD) based on a first communication protocol (or a first wireless interface) and wireless LAN communication (e.g., Wi-Fi) based on a second communication protocol (or a second wireless interface) through at least one wireless resource among different time resources, frequency resources, or spatial resources. For example, when the processor 500 determines that NAN discovery based on USD is performed during wireless LAN communication different from NAN communication, the processor may update scheduling related to wireless LAN communication different from NAN communication to secure wireless resources (e.g., time resources, frequency resources, and/or spatial resources) for USD. The processor 500 may control the communication circuit 510 to perform USD through the wireless resources acquired through the updating of the scheduling related to wireless LAN communication different from NAN communication. In an example, wireless LAN communication different from NAN communication may be performed based on the updated scheduling. In an example, wireless LAN communication different from NAN communication may include at least one of wireless LAN communication (e.g., Wi-Fi) with an access point (AP), direct communication (e.g., Wi-Fi direct) between electronic devices through wireless LAN communication, or wireless LAN communication (e.g., mobile hotspot) for accessing an external network through an external electronic device.

According to an embodiment, the processor 500 may configure (or generate) a NAN data path (NDP) with an external electronic device during performance of USD. The processor 500 may control the communication circuit 510 to perform data communication through the NAN data path with the external electronic device.

According to an embodiment, the processor 500 may determine whether to terminate (or deactivate or stop (e.g., off)) USD (or NAN discovery based on USD), based on the configuration (or generation) of the NAN data path with the external electronic device. For example, the processor 500 may remove information related to the external electronic device from a NAN discovery list, based on the configuration (or generation) of the NAN data path with the external electronic device. When information related to another external electronic device included in the NAN discovery list exists, the processor 500 may control the communication circuit 510 to continuously perform USD (or NAN discovery based on USD). When no information related to another external electronic device included in the NAN discovery list exists, the processor 500 may control the communication circuit 510 to terminate USD (or NAN discovery based on USD).

According to an embodiment, the processor 500 may determine whether to terminate USD (or NAN discovery based on USD), based on information related to NAN discovery termination received from an external electronic device during performance of USD. For example, when information related to NAN discovery termination is received during performance of USD, the processor 500 may identify information (e.g., identification information) related to an external electronic device included in the information related to NAN discovery termination. The processor 500 may remove the information (e.g., identification information) related to the external electronic device from a NAN discovery list. When information related to another external electronic device included in the NAN discovery list exists, the processor 500 may control the communication circuit 510 to continuously perform USD. When no information related to another external electronic device included in the NAN discovery list exists, the processor 500 may control the communication circuit 510 to terminate USD.

According to an embodiment, the processor 500 may control the communication circuit 510 to terminate USD (or NAN discovery based on USD) when a designated time has elapsed during performance of USD. For example, the elapse of the designated time may be identified based on expiration of the operation of a timer operated for the designated time.

According to an embodiment, the processor 500 may update scheduling related to wireless LAN communication (e.g., Wi-Fi, Wi-Fi direct, or hotspot) different from NAN communication, based on termination of performing USD (or NAN discovery based on USD). For example, the processor 500 may perform NAN communication (e.g., USD) based on the first communication protocol (or the first wireless interface) and wireless LAN communication (e.g., Wi-Fi) based on the second communication protocol (or the second wireless interface) through the communication circuit 510. In an example, NAN communication based on the first communication protocol and wireless LAN communication based on the second communication protocol may be performed through a time division, frequency division, or spatial division scheme.

For example, the processor 500 may additionally allocate wireless resources (e.g., time or frequency) allocated to the first communication protocol to wireless LAN communication based on the second communication protocol, based on termination of USD. For example, updating of scheduling related to wireless LAN communication may be performed when USD is terminated based on information related to NAN discovery termination received from an external electronic device.

According to an embodiment, the memory 520 may store various data used by at least one element (e.g., the processor 500 and/or the communication circuit 510) of the electronic device 101. For example, the memory 520 may store various instructions individually or collectively executable via the processor 500.

According to an embodiment, the electronic device 101 may, when performing a search related to an external electronic device and based on NAN communication, terminate the search related to the external electronic device, based on information related to NAN discovery termination. For example, when NAN communication is activated, the electronic device 101 (or the processor 500) may search for an external electronic device with which data communication is to be performed, through a beacon (e.g., a discovery beacon) is transmitted or received for a designated time through a discovery window (e.g., the discovery window 325 in FIG. 3 or the discovery window 450 in FIG. 4). When the information related to NAN discovery termination is received before the designated time elapses, the electronic device 101 (or the processor 500) may terminate the search for the external electronic device performed through the discovery window.

According to an embodiment, an electronic device (e.g., the electronic device 101 in FIG. 1, FIG. 2, FIG. 3, FIG. 4, or FIG. 5) may include a communication circuit (e.g., the wireless communication module 192 in FIG. 1 or the communication circuit 510 in FIG. 5), at least one processor (e.g., the processor 120 in FIG. 1 or the processor 500 in FIG. 5) operatively connected to the communication circuit, and a memory (e.g., the memory 130 in FIG. 1 or the memory 520 in FIG. 5) operatively connected to the at least one processor. According to an embodiment, the memory may store instructions that, when executed by the at least one processor, cause the electronic device to activate USD, based on reception of first information related to activation of NAN communication. According to an embodiment, the memory may store instructions that, when executed by the at least one processor, cause the electronic device to perform discovery related to an external electronic device for a designated time, based on the USD. According to an embodiment, the memory may store instructions that, when executed by the at least one processor, cause the electronic device to terminate the USD, based on reception of information related to termination of NAN discovery during the discovery related to the external electronic device.

For example, the memory may store instructions that, when executed by the at least one processor, cause the electronic device to activate the USD, based on the reception of the information related to activation of NAN communication through at least one of an out-of-band (OOB) scheme, a third-layer discovery protocol scheme related to universal plug and play (uPnP) or multicast domain name system (mDNS), a cloud server request scheme, or a wireless LAN discovery scheme.

According to an embodiment, the memory may store instructions that, when executed by the at least one processor, cause the electronic device to obtain information related to the external electronic device from the first information related to activation of NAN communication. According to an embodiment, the memory may store instructions that, when executed by the at least one processor, cause the electronic device to update a NAN discovery list stored in the memory, based on the information related to the external electronic device.

According to an embodiment, the memory may store instructions that, when executed by the at least one processor, cause the electronic device to, in case that the information related to termination of NAN discovery is received, obtain information related to the external electronic device from the information related to termination of NAN discovery. According to an embodiment, the memory may store instructions that, when executed by the at least one processor, cause the electronic device to remove the information related to the external electronic device from the NAN discovery list.

According to an embodiment, the memory may store instructions that, when executed by the at least one processor, cause the electronic device to, in case that there is no information related to another external electronic device included in the NAN discovery list, based on the removal of the information related to the external electronic device, terminate the USD.

According to an embodiment, the memory may store instructions that, when executed by the at least one processor, cause the electronic device to, in case that there is the information related to the other external electronic device included in the NAN discovery list, perform discovery related to the other external electronic device, based on the USD.

According to an embodiment, the memory may store instructions that, when executed by the at least one processor, cause the electronic device to terminate the USD, based on the reception of the information related to termination of NAN discovery through at least one of an out-of-band (OOB) scheme, a third-layer discovery protocol scheme related to universal plug and play (uPnP) or multicast domain name system (mDNS), a cloud server request scheme, or a wireless LAN discovery scheme.

According to an embodiment, the memory may store instructions that, when executed by the at least one processor, cause the electronic device to, based on the termination of the USD, identify whether wireless LAN communication based on a second communication protocol different from a first communication protocol related to the USD is being performed. According to an embodiment, the memory may store instructions that, when executed by the at least one processor, cause the electronic device to, in case that the wireless LAN communication based on the second communication protocol is being performed, update scheduling of the wireless LAN communication based on the second communication protocol, based on a wireless resource having been allocated for the USD.

According to an embodiment, the memory may store instructions that, when executed by the at least one processor, cause the electronic device to operate a timer operated for the designated time, based on the reception of the first information related to activation of NAN communication. According to an embodiment, the memory may store instructions that, when executed by the at least one processor, cause the electronic device to continuously perform discovery related to an external electronic device, based on the USD while the timer is operated. According to an embodiment, the timer may be reset based on reception of second information related to activation of NAN communication.

According to an embodiment, the memory may store instructions that, when executed by the at least one processor, cause the electronic device to, in case that a discovery time related to the external electronic device exceeds the designated time, terminate the USD.

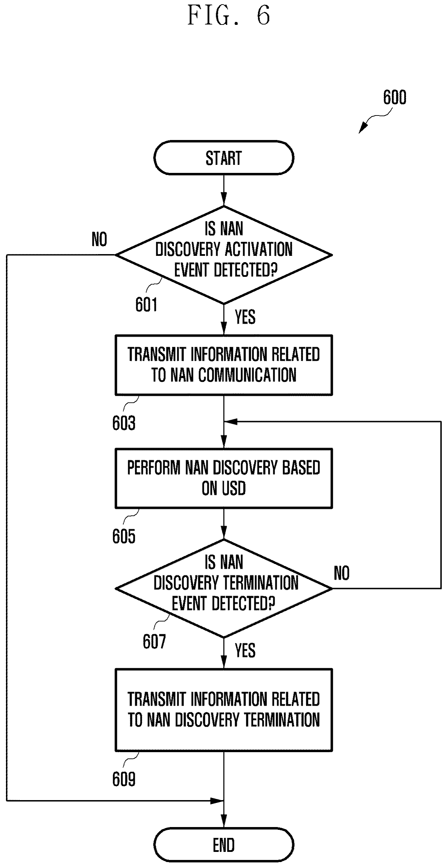

FIG. 6 is a flowchart 600 for performing USD by an external electronic device according to an embodiment. In the embodiment below, operations may be sequentially performed, but are not necessarily performed sequentially. For example, the sequence of operations may be changed, and at least two operations may be performed in parallel. For example, an external electronic device in FIG. 6 may be external electronic device 1 210 in FIG. 2, FIG. 3, or FIG. 4.

According to an embodiment referring to FIG. 6, an external electronic device (e.g., external electronic device 1 210 in FIG. 2, FIG. 3, or FIG. 4) may, in operation 601, identify whether a NAN activation event is detected. For example, the NAN activation event may occur based on at least one of execution of an application program or a function related to NAN communication, reception of a user input (e.g., touch input or voice input), reception of a control signal, or detection of a gesture input. For example, the NAN activation event may also occur based on execution of a user interface related to NAN discovery. For example, the NAN activation event may include an event related to NAN discovery based on USD.

According to an embodiment, when the NAN activation event is not detected (e.g., "No" in operation 601), the external electronic device (e.g., external electronic device 1 210) may terminate an embodiment for performing USD.

According to an embodiment, when the NAN activation event is detected (e.g., "Yes" in operation 601), the external electronic device (e.g., external electronic device 1 210) may, in operation 603, transmit information related to NAN communication. For example, external electronic device 1 210 may transmit (or broadcast) the information related to NAN communication through at least one of an out-of-band (OOB) scheme, a third-layer discovery protocol scheme related to universal plug and play (uPnP) or multicast domain name system (mDNS), a cloud server request scheme, or a wireless LAN discovery scheme. In an example, the information related to NAN communication may include at least one of USD indication information, identification information of the external electronic device, or information related to an application program executed in the external electronic device. For example, external electronic device 1 210 may activate NAN communication, based on detection of the NAN activation event or transmission of the information related to NAN communication.

According to an embodiment, the external electronic device (e.g., external electronic device 1 210) may, in operation 605, perform NAN discovery based on USD. For example, external electronic device 1 210 may alternately perform single channel publish (SCP) or multichannel publish (MCP) for a designated time from a time point at which USD is started. In an example, the SCP may include a series of operations of transmitting a NAN SDF publish through a designated frequency band (e.g., about 2.4 GHz band, about 5 GHz band, or about 6 GHz band). In an example, the MCP may include a series of operations of transmitting a NAN SDF publish through designated frequency bands (e.g., about 2.4 GHz band and about 5 GHz band, about 2.4 GHz band and about 6 GHz band, or about 5 GHz band and about 6 GHz band).

According to an embodiment, the external electronic device (e.g., external electronic device 1 210) may, in operation 607, identify whether an event related to NAN discovery termination is detected. For example, the NAN discovery termination event may occur based on termination of an application program or a function related to NAN communication, or based on termination of execution of a user interface related to NAN discovery.

According to an embodiment, when the event related to the NAN discovery termination is not detected (e.g., "No" in operation 607), the external electronic device (e.g., external electronic device 1 210) may, in operation 605, perform NAN discovery based on USD. For example, when a designated time related to USD has elapsed, external electronic device 1 210 may terminate the NAN discovery based on USD.

According to an embodiment, when the event related to the NAN discovery termination is detected (e.g., "Yes" in operation 607), the external electronic device (e.g., external electronic device 1 210) may, in operation 609, transmit information related to the NAN discovery termination. For example, external electronic device 1 210 may terminate USD, based on detection of the event related to the NAN discovery termination. External electronic device 1 210 may transmit (or broadcast) the information related to the NAN discovery termination through at least one of an OOB scheme, a third-layer discovery protocol scheme related to uPnP or mDNS, a cloud server request scheme, or a wireless LAN discovery scheme, based on the termination of USD. For example, external electronic device 1 210 may terminate USD after elapse of a designated termination time from a time point at which the event related to the NAN discovery termination is detected.

According to an embodiment, external electronic device 1 210 may also transmit (or broadcast) information related to an active state of USD while performing the NAN discovery based on USD. For example, external electronic device 1 210 may transmit (or broadcast) the information related to USD active state through at least one of an OOB scheme, a third-layer discovery protocol scheme related to uPnP or mDNS, a cloud server request scheme, or a wireless LAN discovery scheme. For example, the information related to the USD active state may be continuously or periodically transmitted. In an example, the information related to the USD active state may include at least one of USD active state information, identification information of the external electronic device, or information related to an application program executed in the external electronic device.

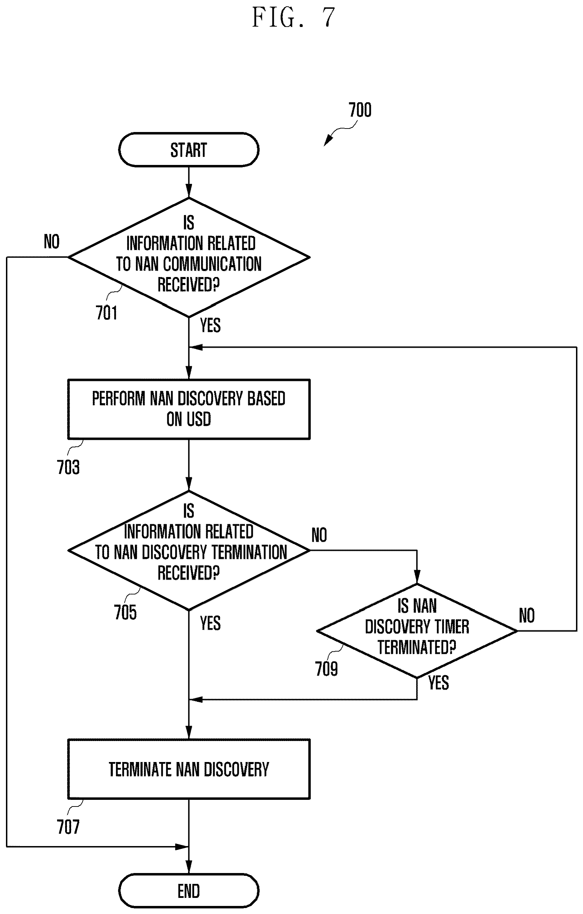

FIG. 7 is a flowchart 700 for performing or terminating NAN discovery based on USD by an electronic device according to an embodiment. In the embodiment below, operations may be sequentially performed, but are not necessarily performed sequentially. For example, the sequence of operations may be changed, and at least two operations may be performed in parallel. For example, an electronic device in FIG. 7 may be the electronic device 101 in FIG. 1, FIG. 2, FIG. 3, FIG. 4, or FIG. 5.

According to an embodiment referring to FIG. 7, an electronic device (e.g., the electronic device 101 in FIG. 1, FIG. 2, FIG. 3, FIG. 4, or FIG. 5) or a processor (e.g., the processor 120 in FIG. 1 or the processor 500 in FIG. 5) may, in operation 701, identify whether information related to NAN communication is received. For example, the information related to NAN communication may be received through at least one of an out-of-band (OOB) scheme, a third-layer discovery protocol scheme related to universal plug and play (uPnP) or multicast domain name system (mDNS), a cloud server request scheme, or a wireless LAN discovery scheme. In an example, the information related to NAN communication may include at least one of USD indication information, identification information of the external electronic device, or information related to an application program executed in the external electronic device.

According to an embodiment, when the information related to NAN communication is not received (e.g., "No" in operation 701), the electronic device (e.g., the electronic device 101) or the processor (e.g., the processor 120 or 500) may terminate an embodiment for searching for an external electronic device.

According to an embodiment, when the information related to NAN communication is received (e.g., "Yes" in operation 701), the electronic device (e.g., the electronic device 101) or the processor (e.g., the processor 120 or 500) may, in operation 703, perform NAN discovery based on an unsynchronized service discovery (USD). For example, the processor 500 may control the communication circuit 510 to activate NAN communication, based on the reception of the information related to NAN communication. The processor 500 may control the communication circuit 510 to perform USD, based on at least one of the USD indication information, the identification information of the external electronic device, or the information related to the application program executed in the external electronic device, which is included in the information related to NAN communication. In an example, the USD may include a series of operations of continuously discovering the external electronic device through NAN communication for a designated time without performing synchronization with the external electronic device.

For example, the processor 500 may update (or generate) a NAN discovery list, based on activation (or performance) of USD. For example, the updating of the NAN discovery list may include a series of operations of adding the identification information of the external electronic device included in the information related to NAN communication to the NAN discovery list. In an example, the NAN discovery list may include information on at least one external electronic device that has requested the electronic device 101 to perform USD.

For example, when an SCP or MCP is received from the external electronic device during performance of USD, the processor 500 may control the communication circuit 510 to transmit a response message (e.g., a follow-up or subscribe) related to the SCP or MCP to the external electronic device.

For example, when the processor 500 determines that USD is performed during wireless LAN communication different from NAN communication, the processor may update scheduling related to wireless LAN communication different from NAN communication to secure wireless resources (e.g., time resources, frequency resources, and/or spatial resources) for USD. The processor 500 may control the communication circuit 510 to perform USD (or the NAN discovery based on USD) through the wireless resources acquired through the updating of the scheduling related to wireless LAN communication different from NAN communication. In an example, the processor 500 may control the communication circuit 510 to provide wireless LAN communication different from NAN communication and NAN communication concurrently through at least one wireless resource among different time resources, frequency resources, or spatial resources. In an example, wireless LAN communication different from NAN communication may include at least one of wireless LAN communication (e.g., Wi-Fi) with an access point (AP), direct communication (e.g., Wi-Fi direct) between electronic devices through wireless LAN communication, or wireless LAN communication (e.g., mobile hotspot) for accessing an external network through an external electronic device.

According to an embodiment, the electronic device (e.g., the electronic device 101) or the processor (e.g., the processor 120 or 500) may, in operation 705, identify whether information related to NAN discovery termination is received during the performance of USD. For example, the information related to the NAN discovery termination may be received through at least one of an OOB scheme, a third-layer discovery protocol scheme, a cloud server request scheme, or a wireless LAN discovery scheme. In an example, the information related to the NAN discovery termination may include information (e.g., identification information) related to the external electronic device that terminates NAN discovery.

According to an embodiment, when the information related to the NAN discovery termination is received during the performance of USD (e.g., "Yes" in operation 705), the electronic device (e.g., the electronic device 101) or the processor (e.g., the processor 120 or 500) may, in operation 707, terminate USD (or the NAN discovery based on USD). For example, when the information related to the NAN discovery termination is received during the performance of USD, the processor 500 may identify information related to the external electronic device included in the information related to the NAN discovery termination. The processor 500 may remove the information (e.g., identification information) related to the external electronic device from the NAN discovery list. When information related to another external electronic device included in the NAN discovery list exists, the processor 500 may control the communication circuit 510 to continuously perform USD (or NAN discovery based on USD). When no information related to another external electronic device included in the NAN discovery list exists, the processor 500 may determine that there is no external electronic device (e.g., publisher) for which USD is to be performed. Based on the determination that there is no external electronic device (e.g., publisher) for which USD is to be performed, the processor 500 may control the communication circuit 510 to terminate USD (or the NAN discovery based on USD).

According to an embodiment, when the information related to the NAN discovery termination is not received during the performance of USD (e.g., "No" in operation 705), the electronic device (e.g., the electronic device 101) or the processor (e.g., the processor 120 or 500) may, in operation 709, identify whether a NAN discovery timer is terminated. For example, the processor 500 may, when performing USD, operate (or reset) a NAN discovery timer operated for a designated time. When the operation of the NAN discovery timer is maintained, the processor 500 may determine to continuously perform USD (or the NAN discovery based on USD). When the operation of the NAN discovery timer has expired, the processor 500 may determine to terminate USD (or the NAN discovery based on USD).

According to an embodiment, when the NAN discovery timer is not terminated (e.g., "No" in operation 709), the electronic device (e.g., the electronic device 101) or the processor (e.g., the processor 120 or 500) may, in operation 703, perform NAN discovery based on USD.

According to an embodiment, when the NAN discovery timer is terminated (e.g., "Yes" in operation 709), the electronic device (e.g., the electronic device 101) or the processor (e.g., the processor 120 or 500) may, in operation 707, terminate USD (or the NAN discovery based on USD).

According to an embodiment, when the electronic device 101 configures (or generates) a NAN data path (NDP) with the external electronic device during the performance of USD, the electronic device may determine that the search (or discovery) for the external electronic device is terminated, and may stop (or terminate) the operation of the NAN discovery timer. The electronic device 101 may, based on the stop of the operation of the NAN discovery timer, terminate USD (or the NAN discovery based on USD) related to the external electronic device. For example, the processor 500 may remove information related to the external electronic device from the NAN discovery list, based on the configuration (or generation) of the NAN data path with the external electronic device. When information related to another external electronic device included in the NAN discovery list exists, the processor 500 may control the communication circuit 510 to continuously perform USD (or NAN discovery based on USD). When no information related to another external electronic device included in the NAN discovery list exists, the processor 500 may control the communication circuit 510 to terminate USD (or the NAN discovery based on USD).

According to an embodiment, when information related to an active state of USD is not received from the external electronic device (e.g., external electronic device 1 210) for a designated reception time in a state where USD is activated, the electronic device 101 may determine that USD of the external electronic device has been terminated. The electronic device 101 may, based on the determination that USD of the external electronic device has been terminated, terminate USD (or the NAN discovery based on USD). For example, when it is determined that USD of the external electronic device has been terminated during the performance of USD, the processor 500 may remove information (e.g., identification information) related to the external electronic device from the NAN discovery list. When information related to another external electronic device included in the NAN discovery list exists, the processor 500 may control the communication circuit 510 to continuously perform USD (or NAN discovery based on USD). When no information related to another external electronic device included in the NAN discovery list exists, the processor 500 may determine that there is no external electronic device (e.g., publisher) for which USD is to be performed. Based on the determination that there is no external electronic device (e.g., publisher) for which USD is to be performed, the processor 500 may control the communication circuit 510 to terminate USD (or the NAN discovery based on USD).

According to an embodiment, the electronic device 101 may, when performing USD for a designated time, consume power by an amount corresponding to Equation 1 below for the designated time.

[Equation 1]

$$V_{op} \times Average\ current\ consumption \times T_{USD}$$

In an example, $V_{op}$ indicates an operation current of the electronic device, an average current consumption indicates an average current consumed when performing NAN communication (e.g., about 75 mA), and $T_{USD}$ may indicate a designated time for performing USD.

According to an embodiment, power saved by the electronic device 101 terminating USD (or the NAN discovery based on USD) before the designated time elapses, based on reception of the information related to the NAN discovery termination, may be represented as Equation 2 below. For example, about 93% of power consumption when performing USD for the designated time may be saved when USD is terminated based on reception of the information related to the NAN discovery termination, if $T_{USD}$ is a first value (e.g., about 30 seconds) and $T'_{USD}$ is a second value (e.g., about 2 seconds).

[Equation 2]

$$V_{op} \times Average\ current\ consumption \times \frac{T_{USD} - T'_{USD}}{3600}$$

In an example, $V_{op}$ indicates an operation current of the electronic device, an average current consumption indicates an average current consumed when performing NAN communication (e.g., about 75 mA), $T_{USD}$ indicates a designated time for performing USD, and $T'_{USD}$ may indicate a performance time of USD terminated based on reception of the information related to the NAN discovery termination.

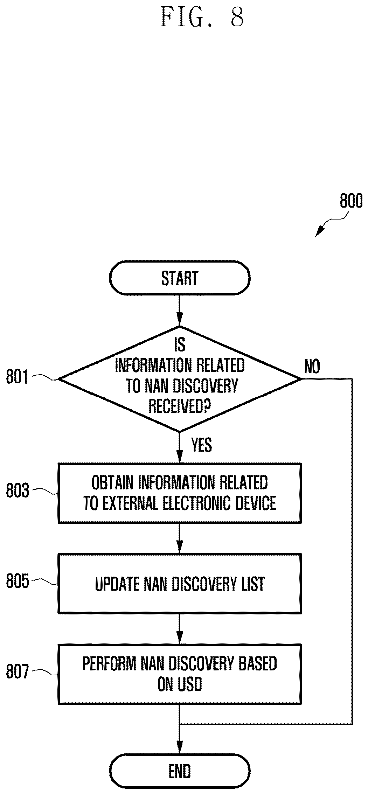

FIG. 8 is a flowchart 800 for performing USD by an electronic device according to an embodiment. According to an embodiment, at least some operations in FIG. 8 may be detailed operations of operation 701 and operation 703 in FIG. 7. In the embodiment below, operations may be sequentially performed, but are not necessarily performed sequentially. For example, the sequence of operations may be changed, and at least two operations may be performed in parallel. For example, an electronic device in FIG. 8 may be the electronic device 101 in FIG. 1, FIG. 2, FIG. 3, FIG. 4, or FIG. 5.

According to an embodiment referring to FIG. 8, an electronic device (e.g., the electronic device 101 in FIG. 1, FIG. 2, FIG. 3, FIG. 4, or FIG. 5) or a processor (e.g., the processor 120 in FIG. 1 or the processor 500 in FIG. 5) may, in operation 801, identify whether information related to NAN communication is received. For example, the information related to NAN communication may be received through at least one of an OOB scheme, a third-layer discovery protocol scheme, a cloud server request scheme, or a wireless LAN discovery scheme. In an example, the information related to NAN communication may include at least one of USD indication information, identification information of the external electronic device, or information related to an application program executed in the external electronic device.

According to an embodiment, when the information related to NAN communication is not received (e.g., "No" in operation 801), the electronic device (e.g., the electronic device 101) or the processor (e.g., the processor 120 or 500) may terminate an embodiment for searching for an external electronic device.

According to an embodiment, when the information related to NAN communication is received (e.g., "Yes" in operation 801), the electronic device (e.g., the electronic device 101) or the processor (e.g., the processor 120 or 500) may, in operation 803, obtain information related to an external electronic device from the information related to NAN communication. For example, the processor 500 may control the communication circuit 510 to activate NAN communication, based on the reception of the information related to NAN communication. For example, the processor 500 may control the communication circuit 510 to activate USD, based on at least one of the USD indication information, the identification information of the external electronic device, or the information related to the application program executed in the external electronic device, which is included in the information related to NAN communication. The processor 500 may obtain the information related to the external electronic device from the information related to NAN communication. According to an embodiment, the electronic device (e.g., the electronic device 101) or the processor (e.g., the processor 120 or 500) may, in operation 805, update (or generate) a NAN discovery list. For example, the processor 500 may update the NAN discovery list, based on the activation of USD. In an example, the updating of the NAN discovery list may include a series of operations of adding the identification information of the external electronic device included in the information related to NAN communication to the NAN discovery list. In an example, the updating of the NAN discovery list may include a series of operations of generating a NAN discovery list including the identification information of the external electronic device obtained from the information related to NAN communication. In an example, the NAN discovery list may include information on at least one external electronic device that has requested the electronic device 101 to perform USD.

According to an embodiment, the electronic device (e.g., the electronic device 101) or the processor (e.g., the processor 120 or 500) may, in operation 807, perform NAN discovery based on USD. For example, the processor 500 may operate (or reset) a NAN discovery timer operated for a designated time, based on activation of USD. While the operation of the NAN discovery timer is maintained, the processor 500 may determine to continuously perform NAN discovery based on USD. For example, when an SCP or MCP is received from the external electronic device during performance of USD, the processor 500 may control the communication circuit 510 to transmit a response message (e.g., a follow-up or subscribe) related to the SCP or MCP to the external electronic device.

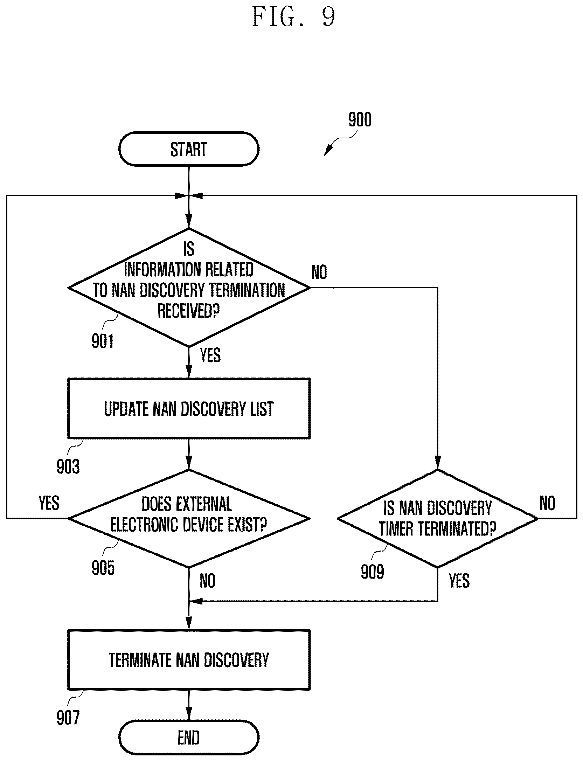

FIG. 9 is a flowchart 900 for terminating USD by an electronic device, based on a NAN discovery list according to an embodiment. According to an embodiment, at least some operations in FIG. 9 may be detailed operations of operation 705 to operation 709 in FIG. 7. In the embodiment below, operations may be sequentially performed, but are not necessarily performed sequentially. For example, the sequence of operations may be changed, and at least two operations may be performed in parallel. For example, an electronic device in FIG. 9 may be the electronic device 101 in FIG. 1, FIG. 2, FIG. 3, FIG. 4, or FIG. 5.

According to an embodiment referring to FIG. 9, an electronic device (e.g., the electronic device 101 in FIG. 1, FIG. 2, FIG. 3, FIG. 4, or FIG. 5) or a processor (e.g., the processor 120 in FIG. 1 or the processor 500 in FIG. 5) may, when performing NAN discovery based on USD (e.g., operation 703 in FIG. 7 or operation 807 in FIG. 8), in operation 901, identify whether information related to NAN discovery termination is received. For example, the information related to the NAN discovery termination may be received through at least one of an OOB scheme, a third-layer discovery protocol scheme, a cloud server request scheme, or a wireless LAN discovery scheme. In an example, the information related to the NAN discovery termination may include information (e.g., identification information) related to an external electronic device that terminates NAN discovery.

According to an embodiment, when the information related to the NAN discovery termination is received during the performance of USD (e.g., "Yes" in operation 901), the electronic device (e.g., the electronic device 101) or the processor (e.g., the processor 120 or 500) may, in operation 903, update a NAN discovery list. For example, when the information related to the NAN discovery termination is received during the performance of USD, the processor 500 may remove the information (e.g., identification information) related to the external electronic device from the NAN discovery list.

According to an embodiment, the electronic device (e.g., the electronic device 101) or the processor (e.g., the processor 120 or 500) may, in operation 905, identify whether there is another external electronic device included in the NAN discovery list. For example, the processor 500 may identify whether there is information related to another external electronic device in the NAN discovery list having been updated based on the reception of the information related to the NAN discovery termination.

According to an embodiment, when it is determined that there is another external electronic device included in the NAN discovery list (e.g., "Yes" in operation 905), the electronic device (e.g., the electronic device 101) or the processor (e.g., the processor 120 or 500) may perform NAN discovery based on USD.

According to an embodiment, when it is determined that there is no other external electronic device included in the NAN discovery list (e.g., "No" in operation 905), the electronic device (e.g., the electronic device 101) or the processor (e.g., the processor 120 or 500) may, in operation 907, terminate the NAN discovery based on USD.

According to an embodiment, when the information related to the NAN discovery termination is not received during the performance of USD (e.g., "No" in operation 901), the electronic device (e.g., the electronic device 101) or the processor (e.g., the processor 120 or 500) may, in operation 909, identify whether a NAN discovery timer is terminated. For example, the processor 500 may, when performing USD, operate (or reset) the NAN discovery timer operated for a designated time. When the operation of the NAN discovery timer is maintained, the processor 500 may determine to continuously perform USD. When the operation of the NAN discovery timer expires, the processor 500 may determine to terminate USD.

According to an embodiment, when the NAN discovery timer is not terminated (e.g., "No" in operation 909), the electronic device (e.g., the electronic device 101) or the processor (e.g., the processor 120 or 500) may perform NAN discovery based on USD.

According to an embodiment, when the NAN discovery timer is terminated (e.g., "Yes" in operation 909), the electronic device (e.g., the electronic device 101) or the processor (e.g., the processor 120 or 500) may, in operation 907, terminate USD.

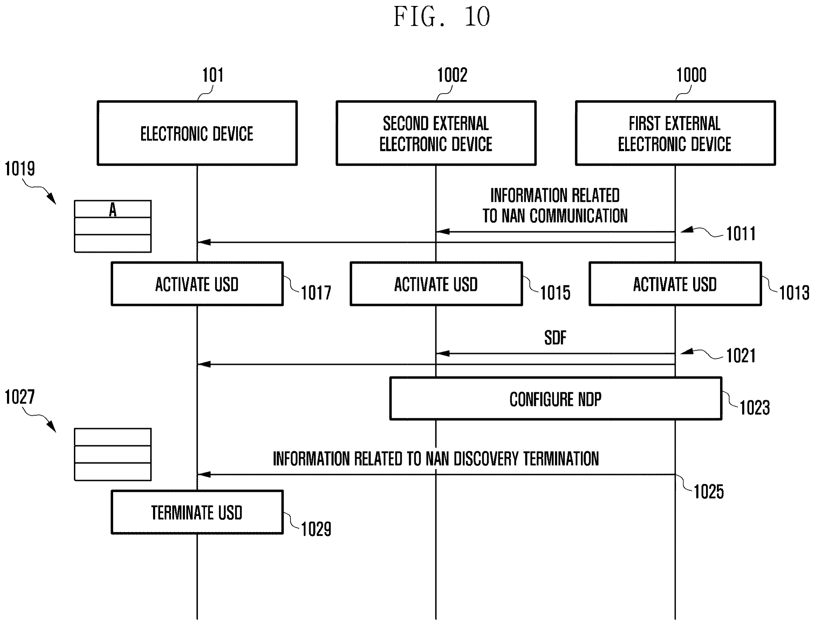

FIG. 10 illustrates an example for terminating USD by an electronic device according to an embodiment.

According to an embodiment referring to FIG. 10, a first external electronic device 1000 (e.g., external electronic device 1 210 in FIG. 2, FIG. 3, or FIG. 4) may, when a NAN activation event is detected, transmit (or broadcast) information related to NAN communication (e.g., operation 1011). For example, the NAN activation event (e.g., an event for NAN discovery based on USD) may occur based on at least one of execution of an application program or a function related to NAN communication, reception of a user input (e.g., touch input or voice input), reception of a control signal, or detection of a gesture input. For example, the NAN activation event may also occur based on execution of a user interface related to NAN discovery. For example, the information related to NAN communication may be transmitted (or broadcast) through at least one of an out-of-band (OOB) scheme, a third-layer discovery protocol scheme related to universal plug and play (uPnP) or multicast domain name system (mDNS), a cloud server request scheme, or a wireless LAN discovery scheme. For example, the first external electronic device 1000 may broadcast a BLE message (e.g., BLE advertisement) when the NAN activation event is detected. In an example, the BLE message may include at least one of USD indication information, information related to the external electronic device, or information related to an application program executed in the external electronic device.

For example, the first external electronic device 1000 may activate NAN communication, based on detection of the NAN activation event or transmission of the information related to NAN communication (e.g., operation 1013). In an example, the activation of NAN communication may include a series of operations of activating NAN discovery based on USD.

According to an embodiment, a second external electronic device 1002 (e.g., external electronic device 2 220 in FIG. 2, FIG. 3, or FIG. 4) may activate NAN discovery based on USD, based on reception of the information related to NAN communication (e.g., operation 1015). For example, the second external electronic device 1002 may activate USD, based on at least one of the USD indication information, identification information of the external electronic device (e.g., the first external electronic device 1000), or the information related to the application program executed in the external electronic device (e.g., the first external electronic device 1000), which is included in the information related to NAN communication. For example, the second external electronic device 1002 may update (or generate) a NAN discovery list including information (e.g., "A") related to the first external electronic device 1000.

According to an embodiment, the electronic device 101 may activate NAN discovery based on USD, based on reception of the information related to NAN communication (e.g., operation 1017). For example, the electronic device 101 may activate USD, based on at least one of the USD indication information, the identification information of the external electronic device (e.g., the first external electronic device 1000), or the information related to the application program executed in the external electronic device (e.g., the first external electronic device 1000), which is included in the information related to NAN communication. For example, the electronic device 101 may update (or generate) a NAN discovery list including information (e.g., "A") related to the first external electronic device 1000 (e.g., operation 1019).

According to an embodiment, the first external electronic device 1000 may transmit an SDF while performing the NAN discovery based on USD (operation 1021). For example, the SDF may include at least one of a NAN SDF publish through a designated frequency band (e.g., about a 2.4 GHz band, about a 5 GHz band, or about a 6 GHz band) or a NAN SDF publish through designated frequency bands (e.g., about a 2.4 GHz band and about a 5 GHz band, about a 2.4 GHz band and about a 6 GHz band, or about a 5 GHz band and about a 6 GHz band).

According to an embodiment, when the SDF is received from the first external electronic device 1000 during the performance of USD (operation 1021), the electronic device 101 and the second external electronic device 1002 may transmit a response message (e.g., follow-up or subscribe) related to the SDF to the first external electronic device 1000.

According to an embodiment, the first external electronic device 1000 may configure (or generate) an NDP with the second external electronic device 1002, based on the response message related to the SDF (e.g., operation 1023). For example, the first external electronic device 1000 may obtain information related to a function or a service provided by the electronic device 101 from the response message related to the SDF received from the electronic device 101. The first external electronic device 1000 may obtain information related to a function or a service provided by the second external electronic device 1002 from the response message related to the SDF received from the second external electronic device 1002. For example, when the second external electronic device 1002 is selected based on the information related to the function or the service provided by each of the electronic device 101 and the second external electronic device 1002, the first external electronic device 1000 may configure (or generate) an NDP with the second external electronic device 1002. In an example, the second external electronic device 1002 may be selected based on a user input.

According to an embodiment, when an event related to NAN discovery termination is detected, the first external electronic device 1000 may transmit information related to the NAN discovery termination (e.g., operation 1025). For example, the NAN discovery termination event may occur based on termination of an application program or a function related to NAN communication, or based on termination of execution of a user interface related to NAN discovery. For example, the information related to the NAN discovery termination may be transmitted (or broadcast) through at least one of an OOB scheme, a third-layer discovery protocol scheme related to uPnP or mDNS, a cloud server request scheme, or a wireless LAN discovery scheme.

According to an embodiment, when the information related to the NAN discovery termination is received during the performance of USD (e.g., operation 1025), the electronic device 101 may remove the information (e.g., identification information) related to the first external electronic device 1000 from the NAN discovery list (e.g., operation 1027).

According to an embodiment, the electronic device 101 may terminate the NAN discovery based on USD, based on an update of the NAN discovery list (e.g., operation 1029). For example, the electronic device 101 may identify whether there is information related to another external electronic device in the NAN discovery list having been updated based on the reception of the information related to the NAN discovery termination. For example, when it is determined that there is no other external electronic device included in the NAN discovery list, the electronic device 101 may terminate the NAN discovery based on USD.

According to an embodiment, when it is determined that there is an external electronic device (or another external electronic device) included in the NAN discovery list, the electronic device 101 may continuously perform NAN discovery based on USD.

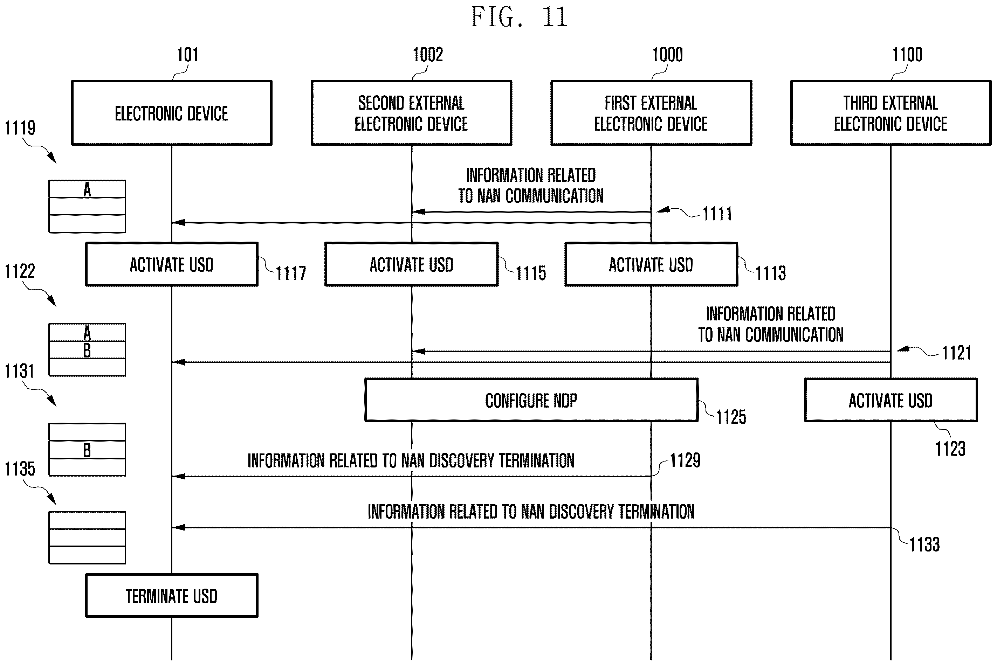

FIG. 11 illustrates an example for terminating USD by an electronic device according to an embodiment.

According to an embodiment referring to FIG. 11, a first external electronic device 1000 (e.g., external electronic device 1 210 in FIG. 2, FIG. 3, or FIG. 4) may, when a NAN activation event is detected, transmit (or broadcast) information related to NAN communication (e.g., operation 1111). For example, the NAN activation event (e.g., an event for NAN discovery based on USD) may occur based on at least one of execution of an application program related to NAN communication, reception of a user input (e.g., touch input or voice input), reception of a control signal, or detection of a gesture input. For example, the information related to NAN communication may be transmitted (or broadcast) through at least one of an OOB scheme, a third-layer discovery protocol scheme related to uPnP or mDNS, a cloud server request scheme, or a wireless LAN discovery scheme.

For example, the first external electronic device 1000 may activate NAN communication, based on detection of the NAN activation event or transmission of the information related to NAN communication (e.g., operation 1113). In an example, the activation of NAN communication may include a series of operations of activating NAN discovery based on USD.

According to an embodiment, a second external electronic device 1002 (e.g., external electronic device 2 220 in FIG. 2, FIG. 3, or FIG. 4) may activate NAN discovery based on USD, based on reception of the information related to NAN communication (e.g., operation 1115). For example, the second external electronic device 1002 may activate USD, based on at least one of the USD indication information, identification information of the external electronic device (e.g., the first external electronic device 1000), or the information related to the application program executed in the external electronic device (e.g., the first external electronic device 1000), which is included in the information related to NAN communication. For example, the second external electronic device 1002 may update (or generate) a NAN discovery list including information (e.g., "A") related to the first external electronic device 1000. For example, the second external electronic device 1002 may operate (or reset) a NAN discovery timer operated for a designated time, based on the activation of the NAN discovery based on USD. In an example, the designated time may indicate a time for which the second external electronic device 1002 continuously performs USD.

According to an embodiment, the electronic device 101 may activate NAN discovery based on USD, based on reception of the information related to NAN communication (e.g., operation 1117). For example, the electronic device 101 may activate USD, based on at least one of the USD indication information, the identification information of the external electronic device (e.g., the first external electronic device 1000), or the information related to the application program executed in the external electronic device (e.g., the first external electronic device 1000), which is included in the information related to NAN communication. For example, the electronic device 101 may update (or generate) a NAN discovery list including information (e.g., "A") related to the first external electronic device 1000 (e.g., operation 1119). For example, the electronic device 101 may operate (or reset) a NAN discovery timer operated for a designated time, based on the activation of the NAN discovery based on USD. In an example, the designated time may indicate a time for which the electronic device 101 continuously performs USD.

According to an embodiment, a third external electronic device 1100 (e.g., external electronic device 3 230 in FIG.

2 or FIG. 3) may, when a NAN activation event is detected, transmit (or broadcast) information related to NAN communication (e.g., operation 1121). For example, the third external electronic device 1100 may activate NAN communication, based on detection of the NAN activation event or transmission of the information related to NAN communication (e.g., operation 1123). In an example, the activation of NAN communication may include a series of operations of activating NAN communication in an inactive state, a series of operations of activating NAN communication in an inactive state to activate NAN discovery based on USD, or a series of operations of activating NAN discovery based on USD in NAN communication in an active state.

According to an embodiment, the second external electronic device 1002 may update the NAN discovery list, based on reception of the information related to NAN communication from the third external electronic device 1100. For example, the updating of the NAN discovery list may include a series of operations of adding information (e.g., "B") related to the third external electronic device 1100 to the NAN discovery list. For example, the second external electronic device 1002 may reset the NAN discovery timer, based on reception of the information related to NAN communication.

According to an embodiment, the electronic device 101 may update the NAN discovery list, based on reception of the information related to NAN communication from the third external electronic device 1100 (e.g., operation 1122). For example, the updating of the NAN discovery list may include a series of operations of adding information (e.g., "B") related to the third external electronic device 1100 to the NAN discovery list. For example, the electronic device 101 may reset the NAN discovery timer, based on reception of the information related to NAN communication.

According to an embodiment, the first external electronic device 1000 may configure (or generate) an NDP with the second external electronic device 1002 through the NAN discovery based on USD (e.g., operation 1125). For example, when the second external electronic device 1002 for data communication is discovered through the NAN discovery based on USD, the first external electronic device 1000 may perform synchronization and configure (or generate) an NDP with the second external electronic device 1002.

According to an embodiment, when an event related to NAN discovery termination is detected, the first external electronic device 1000 may transmit information related to the NAN discovery termination (e.g., operation 1129). For example, the NAN discovery termination event may occur based on termination of execution of an application program or a function related to NAN communication, or based on termination of execution of a user interface related to NAN discovery. For example, the information related to the NAN discovery termination may be transmitted (or broadcast) through at least one of an OOB scheme, a third-layer discovery protocol scheme related to uPnP or mDNS, a cloud server request scheme, or a wireless LAN discovery scheme.

According to an embodiment, when the information related to the NAN discovery termination is received from the first external electronic device 1000 during the performance of USD (e.g., operation 1129), the electronic device 101 may remove the information (e.g., "A") related to the first external electronic device 1000 from the NAN discovery list (e.g., operation 1131).

According to an embodiment, the electronic device 101 may identify whether there is information related to another external electronic device (e.g., the third external electronic device 1100) in the NAN discovery list having been updated based on the reception of the information related to the NAN discovery termination. When it is determined that there is another external electronic device (e.g., the third external electronic device 1100) included in the NAN discovery list, the electronic device 101 may continuously perform NAN discovery based on USD.

According to an embodiment, when an event related to NAN discovery termination is detected, the third external electronic device 1100 may transmit information related to the NAN discovery termination (e.g., operation 1133).

According to an embodiment, when the information related to the NAN discovery termination is received from the third external electronic device 1100 during the performance of USD (e.g., operation 1133), the electronic device 101 may remove the information (e.g., "B") related to the third external electronic device 1100 from the NAN discovery list (e.g., operation 1135).

According to an embodiment, the electronic device 101 may identify whether there is information related to another external electronic device in the NAN discovery list having been updated based on the reception of the information related to the NAN discovery termination. When it is determined that there is no other external electronic device included in the NAN discovery list, the electronic device 101 may terminate the NAN discovery based on USD (e.g., operation 1137).

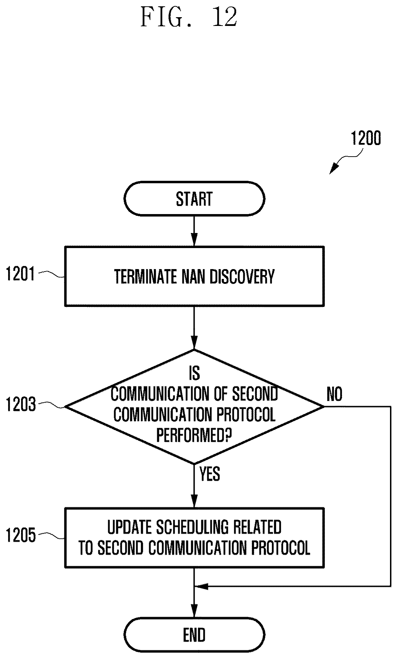

FIG. 12 is a flowchart 1200 for updating scheduling related to a communication protocol different from that of NAN communication by an electronic device, based on termination of USD according to an embodiment. According to an embodiment, at least some operations in FIG. 12 may be detailed operations of operation 707 in FIG. 7 or operation 907 in FIG. 9. In the embodiment below, operations may be sequentially performed, but are not necessarily performed sequentially. For example, the sequence of operations may be changed, and at least two operations may be performed in parallel. For example, an electronic device in FIG. 12 may be the electronic device 101 in FIG. 1, FIG. 2, FIG. 3, FIG. 4, or FIG. 5.

According to an embodiment referring to FIG. 12, an electronic device (e.g., the electronic device 101 in FIG. 1, FIG. 2, FIG. 3, FIG. 4, or FIG. 5) or a processor (e.g., the processor 120 in FIG. 1 or the processor 500 in FIG. 5) may, when information related to NAN discovery termination is received during performance of USD (e.g., "Yes" in operation 705 in FIG. 7), in operation 1201, terminate NAN discovery based on USD. For example, when the information related to the NAN discovery termination is received during the performance of USD, the processor 500 may remove, from a NAN discovery list, information related to an external electronic device, based on the information related to the NAN discovery termination. When no information related to another external electronic device included in the NAN discovery list exists, the processor 500 may determine that there is no external electronic device (e.g., publisher) for which USD is to be performed. Based on the determination that there is no external electronic device (e.g., publisher) for which USD is to be performed, the processor 500 may control the communication circuit 510 to terminate USD.

According to an embodiment, the electronic device (e.g., the electronic device 101) or the processor (e.g., the processor 120 or 500) may, in operation 1203, identify whether wireless LAN communication is being performed based on a second communication protocol different from a first communication protocol related to NAN communication. For example, the processor 500 may perform NAN communication (e.g., USD) based on the first communication protocol (or a first wireless interface) and wireless LAN communication (e.g., Wi-Fi) based on the second communication protocol (or a second wireless interface) through the communication circuit 510. In an example, NAN communication based on the first communication protocol and wireless LAN communication based on the second communication protocol may be performed through a time division, frequency division, or spatial division scheme. For example, when the performance of USD based on the first communication protocol is terminated, the processor 500 may identify whether wireless LAN communication (e.g., Wi-Fi) is being performed based on the second communication protocol.

According to an embodiment, when not performing wireless LAN communication based on the second communication protocol (e.g., "No" in operation 1203), the electronic device (e.g., the electronic device 101) or the processor (e.g., the processor 120 or 500) may terminate an embodiment for updating scheduling related to the second communication protocol.

According to an embodiment, when performing wireless LAN communication based on the second communication protocol (e.g., "Yes" in operation 1203), the electronic device (e.g., the electronic device 101) or the processor (e.g., the processor 120 or 500) may, in operation 1205, update the scheduling related to the second communication protocol. For example, the processor 500 may additionally allocate wireless resources (e.g., time or frequency) having been allocated to the first communication protocol to wireless LAN communication based on the second communication protocol, based on the termination of USD.

According to an embodiment, an operating method of an electronic device (e.g., the electronic device 101 in FIG. 1, FIG. 2, FIG. 3, FIG. 4, or FIG. 5) may include activating USD, based on reception of first information related to activation of NAN communication. According to an embodiment, the operating method of the electronic device may include performing discovery related to an external electronic device for a designated time, based on the USD. According to an embodiment, the operating method of the electronic device may include terminating the USD, based on reception of information related to termination of NAN discovery during the discovery related to the external electronic device.

According to an embodiment, the operating method of the electronic device may include obtaining information related to the external electronic device from the information related to activation of NAN communication. According to an embodiment, the operating method of the electronic device may include updating a NAN discovery list, based on the information related to the external electronic device.

According to an embodiment, the operating method of the electronic device may include, in case that the information related to termination of NAN discovery is received, obtaining information related to the external electronic device from the information related to termination of NAN discovery. According to an embodiment, the operating method of the electronic device may include removing the information related to the external electronic device from the NAN discovery list.

According to an embodiment, the terminating of the USD may include, in case that there is no information related to another external electronic device included in the NAN discovery list, based on the removal of the information related to the external electronic device, terminating the USD.

According to an embodiment, the operating method of the electronic device may include, in case that there is the information related to the other external electronic device included in the NAN discovery list, performing discovery related to the other external electronic device, based on the USD.

According to an embodiment, the operating method of the electronic device may include receiving the information related to activation of NAN discovery through at least one of an out-of-band (OOB) scheme, a third-layer discovery protocol scheme related to universal plug and play (uPnP) or multicast domain name system (mDNS), a cloud server request scheme, or a wireless LAN discovery scheme. According to an embodiment, the operating method of the electronic device may include receiving the information related to termination of NAN discovery through at least one of an out-of-band (OOB) scheme, a third-layer discovery protocol scheme related to universal plug and play (uPnP) or multicast domain name system (mDNS), a cloud server request scheme, or a wireless LAN discovery scheme.

According to an embodiment, the operating method of the electronic device may include, based on the termination of the USD, identifying whether wireless LAN communication based on a second communication protocol different from a first communication protocol related to the USD is being performed. According to an embodiment, the operating method of the electronic device may include, in case that the wireless LAN communication based on the second communication protocol is being performed, updating scheduling of the wireless LAN communication based on the second communication protocol, based on a wireless resource having been allocated for the USD.

According to an embodiment, the performing of the discovery related to the external electronic device may include operating a timer operated for the designated time, based on the reception of the first information related to activation of NAN communication, and continuously performing discovery related to an external electronic device, based on the USD while the timer is operated.

According to an embodiment, the operating method of the electronic device may include terminating the USD in case that a discovery time related to the external electronic device exceeds the designated time.

Embodiments of the disclosure described and shown in this specification and the drawings have presented specific examples in order to easily explain the technical contents of embodiments of the disclosure and help understanding of embodiments of the disclosure, and are not intended to limit the scope of embodiments of the disclosure. Therefore, the scope of embodiments of the disclosure should be construed to include, in addition to the embodiments disclosed herein, all changes and modifications that are derived based on the technical idea of embodiments of the disclosure.

## Claims

1. An electronic device (101) comprising:

   a communication circuit (192 or 510) configured to support wireless LAN communication;
   at least one processor (120 or 500) operatively connected to the communication circuit; and
   a memory (130 or 520) operatively connected to the at least one processor (120 or 500),
   wherein the memory (130 or 520) is configured to store instructions that, when executed by the at least one processor (120 or 500), cause the electronic device (101) to:

      activate unsynchronized service discovery (USD), based on reception of first information related to activation of neighbor awareness networking (NAN) communication;
      perform discovery related to an external electronic device (210 or 1000) for a designated time period, based on the USD; and
      terminate the USD, based on reception of information related to termination of NAN discovery during the discovery related to the external electronic device.

2. The electronic device of claim 1, wherein the memory (130 or 520) is configured to store instructions that, when executed by the at least one processor (120 or 500), cause the electronic device (101) to:

   obtain information related to the external electronic device (210 or 1000) from the first information related to activation of NAN communication; and
   update a NAN discovery list stored in the memory (130 or 520), based on the information related to the external electronic device (210 or 1000).

3. The electronic device of one of claims 1 and 2, wherein the memory (130 or 520) is configured to store instructions that, when executed by the at least one processor (120 or 500), cause the electronic device (101) to:

   in case that the information related to termination of NAN discovery is received, obtain information related to the external electronic device (210 or 1000) from the information related to termination of NAN discovery; and
   remove the information related to the external electronic device from the NAN discovery list.

4. The electronic device of one of claims 1 to 3, wherein the memory (130 or 520) is configured to store instructions that, when executed by the at least one processor (120 or 500), cause the electronic device (101) to terminate the USD in case that, based on the removal of the information related to the external electronic device (210 or 1000), there is no information related to another external electronic device included in the NAN discovery list.

5. The electronic device of one of claims 1 to 4, wherein the memory (130 or 520) is configured to store instructions that, when executed by the at least one processor (120 or 500), cause the electronic device (101) to, in case that there is the information related to another external electronic device included in the NAN discovery list, perform discovery related to the other external electronic device, based on the USD.

6. The electronic device of one of claims 1 and 5, wherein the memory (130 or 520) is configured to store instructions that, when executed by the at least one processor (120 or 500), cause the electronic device (101) to:

based on the termination of the USD, identify whether wireless LAN communication based on a second communication protocol different from a first communication protocol related to the USD is being performed; and in case that the wireless LAN communication based on the second communication protocol is being performed, update scheduling of the wireless LAN communication based on the second communication protocol, based on a radio resource that has been allocated to the USD.

7. The electronic device of claim 1, wherein the memory (130 or 520) is configured to store instructions that, when executed by the at least one processor (120 or 500), cause the electronic device (101) to:

based on the reception of the first information related to activation of NAN communication, operate a timer that is operated for the designated time period; and
while the timer is operated, continuously perform discovery related to the external electronic device, based on the USD, and
wherein the timer is reset based on reception of second information related to activation of NAN communication.

8. The electronic device of one of claims 1 and 7, wherein the memory (130 or 520) is configured to store instructions that, when executed by the at least one processor (120 or 500), cause the electronic device (101) to terminate the USD in case that a discovery time period related to the external electronic device exceeds the designated time period.

9. An operating method of an electronic device (101), the method comprising:

activating unsynchronized service discovery (USD), based on reception of first information related to activation of neighbor awareness networking (NAN) communication;
performing discovery related to an external electronic device (210 or 1000) for a designated time period, based on the USD; and
terminating the USD, based on reception of information related to termination of NAN discovery during the discovery related to the external electronic device.

10. The method of claim 9, further comprising:

obtaining information related to the external electronic device (210 or 1000) from the first information related to activation of NAN communication; and
updating a NAN discovery list, based on the information related to the external electronic device (210 or 1000).

11. The method of one of claims 9 and 10, further comprising:

in case that the information related to termination of NAN discovery is received, obtaining information related to the external electronic device (210 or 1000) from the information related to termination of NAN discovery; and
removing the information related to the external electronic device (210 or 1000) from the NAN discovery list.

12. The method of one of claims 9 to 11, wherein the terminating of the USD comprises terminating the USD in case that, based on the removal of the information related to the external electronic device (210 or 1000), there is no information related to another external electronic device included in the NAN discovery list.

13. The method of one of claims 9 to 12, further comprising, in case that there is the information related to another external electronic device included in the NAN discovery list, performing discovery related to the other external electronic device, based on the USD.

14. The method of one of claims 9 and 13, further comprising:

based on the termination of the USD, identifying whether wireless LAN communication based on a second communication protocol different from a first communication protocol related to the USD is being performed; and
in case that the wireless LAN communication based on the second communication protocol is being performed, updating scheduling of the wireless LAN communication based on the second communication protocol, based on a radio resource that has been allocated to the USD.

**15.** The method of claim 9, wherein the performing of the discovery related to the external electronic device comprises:

based on the reception of the first information related to activation of NAN communication, operating a timer that is operated for the designated time period; and

while the timer is operated, continuously performing discovery related to the external electronic device, based on the USD, and

wherein the timer is reset based on reception of second information related to activation of NAN communication.

FIG. 1

**100**

**ELECTRONIC DEVICE (101)**

- PROGRAM (140)
  - APPLICATION (146)
  - MIDDLEWARE (144)
  - OPERATING SYSTEM (142)

- MEMORY (130)
  - VOLATILE MEMORY (132)
  - NON-VOLATILE MEMORY (134)
    - INTERNAL MEMORY (136)
    - EXTERNAL MEMORY (138)

- INPUT MODULE (150)
- SOUND OUTPUT MODULE (155)
- DISPLAY MODULE (160)
- BATTERY (189)

- PROCESSOR (120)
  - MAIN PROCESSOR (121)
  - AUXILIARY PROCESSOR (123)

- POWER MANAGEMENT MODULE (188)

- COMMUNICATION MODULE (190)
  - WIRELESS COMMUNICATION MODULE (192)
  - WIRED COMMUNICATION MODULE (194)

- ANTENNA MODULE (197)
- SUBSCRIBER IDENTIFICATION MODULE (196)
- CONNECTION TERMINAL (178)
- INTERFACE (177)

- AUDIO MODULE (170)
- SENSOR MODULE (176)
- HAPTIC MODULE (179)
- CAMERA MODULE (180)

SECOND NETWORK (199)

FIRST NETWORK (198)

ELECTRONIC DEVICE (104)

SERVER (108)

ELECTRONIC DEVICE (102)

# FIG. 2

# FIG. 3

NAN Discovery Beacons (ch.6) — 330

NAN Devices contend to transmit NAN Sync Beacons (ch.6) — 310

NAN Devices contend to transmit NAN Service Discovery frames (ch.6) — 320

NAN Discovery Beacons (ch.6) — 330

NAN Devices contend to transmit NAN Sync Beacons (ch.6) — 310

NAN Devices contend to transmit NAN Service Discovery frames (ch.6) — 320

NAN Discovery Beacons (ch.6) — 330

DWStart

DWEnd

512 TUs

DW [325]

16 TUs

DWStart

DW [325]

DWEnd

Interval between DWs (340)

EP 4 730 849 A1

# FIG. 4

EXTERNAL ELECTRONIC DEVICE 1 (210)

↑ : BEACON AND SDF TRANSMITTED BY FIRST ELECTRONIC DEVICE WITHIN DW

Synchronous

DW

DW (450)  Interval (460)

ELECTRONIC DEVICE (101)

EXTERNAL ELECTRONIC DEVICE 2 (220)

↑ : ALL ELECTRONIC DEVICES WITHIN CLUSTER RECEIVE BEACON AND SDF OF FIRST ELECTRONIC DEVICE

EP 4 730 849 A1

FIG. 5

# FIG. 6

600

```
        ┌─────────────┐
        │    START    │
        └─────────────┘
               │
               ▼
          ╱─────────╲
         ╱   IS NAN  ╲
  NO    ╱ DISCOVERY  ╲
◄──────╱  ACTIVATION  ╲
        ╲ EVENT DETECTED?╱
         ╲             ╱
    601   ╲───────────╱
               │ YES
               ▼
   ┌───────────────────────┐
   │ TRANSMIT INFORMATION  │
   │     RELATED TO        │
   │   NAN COMMUNICATION   │
   └───────────────────────┘
    603        │
               ▼
   ┌───────────────────────┐
   │ PERFORM NAN DISCOVERY │
   │      BASED ON USD     │
   └───────────────────────┘
    605        │
               ▼
          ╱─────────╲
         ╱   IS NAN  ╲        NO
        ╱ DISCOVERY   ╲──────────►
        ╲ TERMINATION ╱
         ╲EVENT DETECTED?╱
    607   ╲───────────╱
               │ YES
               ▼
   ┌───────────────────────┐
   │ TRANSMIT INFORMATION  │
   │   RELATED TO NAN      │
   │ DISCOVERY TERMINATION │
   └───────────────────────┘
    609        │
               ▼
        ┌─────────────┐
        │     END     │
        └─────────────┘
```

FIG. 7

# FIG. 8

800

```
           START
             │
             ▼
801 ─┐   ┌─────────────┐
     │   │      IS      │        NO
     │   │ INFORMATION RELATED ├──────┐
     └───┤ TO NAN DISCOVERY    │      │
         │   RECEIVED?   │      │
         └──────┬────────┘      │
                │ YES           │
                ▼               │
803 ─┐ ┌────────────────────┐   │
     └─┤ OBTAIN INFORMATION RELATED │ │
       │ TO EXTERNAL ELECTRONIC DEVICE │ │
       └─────────┬──────────┘   │
                 ▼              │
805 ─┐ ┌────────────────────┐   │
     └─┤ UPDATE NAN DISCOVERY LIST │ │
       └─────────┬──────────┘   │
                 ▼              │
807 ─┐ ┌────────────────────┐   │
     └─┤ PERFORM NAN DISCOVERY BASED │ │
       │       ON USD       │   │
       └─────────┬──────────┘   │
                 ▼              │
                 ◄──────────────┘
             ┌───────┐
             │  END  │
             └───────┘
```

# FIG. 9

900

START

IS INFORMATION RELATED TO NAN DISCOVERY TERMINATION RECEIVED?
901

NO

YES

UPDATE NAN DISCOVERY LIST
903

DOES EXTERNAL ELECTRONIC DEVICE EXIST?
905

YES

NO

IS NAN DISCOVERY TIMER TERMINATED?
909

NO

YES

TERMINATE NAN DISCOVERY
907

END

# FIG. 10

# FIG. 11

FIG. 12

1200

START

1201 — TERMINATE NAN DISCOVERY

1203 — IS COMMUNICATION OF SECOND COMMUNICATION PROTOCOL PERFORMED?

NO

YES

1205 — UPDATE SCHEDULING RELATED TO SECOND COMMUNICATION PROTOCOL

END

## INTERNATIONAL SEARCH REPORT

| International application No. |
|---|
| **PCT/KR2024/009516** |

**A. CLASSIFICATION OF SUBJECT MATTER**

**H04W 8/00**(2009.01)i; **H04W 40/24**(2009.01)i; **H04W 4/80**(2018.01)i; **H04W 84/12**(2009.01)i; **H04W 4/40**(2018.01)i

According to International Patent Classification (IPC) or to both national classification and IPC

**B. FIELDS SEARCHED**

Minimum documentation searched (classification system followed by classification symbols)

H04W 8/00(2009.01); G06F 15/16(2006.01); G06K 9/00(2006.01); H04N 7/18(2006.01); H04W 4/00(2009.01); H04W 40/24(2009.01); H04W 48/16(2009.01); H04W 56/00(2009.01); H04W 84/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NAN, USD, 지정된 시간(predetermined time), 탐색(discovery), 종료(termination)

**C. DOCUMENTS CONSIDERED TO BE RELEVANT**

| Category* | Citation of document, with indication, where appropriate, of the relevant passages | Relevant to claim No. |
|---|---|---|
| Y<br><br>A | KR 10-2017-0090213 A (DANKOOK UNIVERSITY CHEONAN CAMPUS INDUSTRY ACADEMIC COOPERATION FOUNDATION) 07 August 2017 (2017-08-07)<br>See paragraphs [0051]-[0054], [0061] and [0100]-[0104]. | 1-5,7-13,15<br><br>6,14 |
| Y | US 2009-0013081 A1 (LAROIA, Rajiv et al.) 08 January 2009 (2009-01-08)<br>See paragraphs [0047], [0055], [0175], [0183] and [0235]-[0236]. | 1-5,7-13,15 |
| A | US 2016-0309404 A1 (NOKIA TECHNOLOGIES OY) 20 October 2016 (2016-10-20)<br>See paragraphs [0191]-[0192]. | 1-15 |
| A | KR 10-1785674 B1 (LG ELECTRONICS INC.) 16 October 2017 (2017-10-16)<br>See paragraphs [0005]-[0006] and [0071]-[0072]. | 1-15 |
| A | KR 10-2019-0077947 A (SAMSUNG ELECTRONICS CO., LTD.) 04 July 2019 (2019-07-04)<br>See paragraphs [0122]-[0140] and figure 9. | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 September 2024** | **20 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/009516**

| Patent document cited in search report | | | Publication date (day/month/year) | Patent family member(s) | | | Publication date (day/month/year) |
|---|---|---|---|---|---|---|---|
| KR | 10-2017-0090213 | A | 07 August 2017 | KR | 10-1934156 | B1 | 31 December 2018 |
| US | 2009-0013081 | A1 | 08 January 2009 | CN | 101690283 | A | 31 March 2010 |
| | | | | CN | 101690283 | B | 19 February 2014 |
| | | | | EP | 2023680 | A1 | 11 February 2009 |
| | | | | JP | 2010-532968 | A | 14 October 2010 |
| | | | | JP | 5389795 | B2 | 15 January 2014 |
| | | | | KR | 10-1120216 | B1 | 19 March 2012 |
| | | | | KR | 10-2010-0037620 | A | 09 April 2010 |
| | | | | TW | 200913602 | A | 16 March 2009 |
| | | | | US | 8601156 | B2 | 03 December 2013 |
| | | | | WO | 2009-009313 | A1 | 15 January 2009 |
| US | 2016-0309404 | A1 | 20 October 2016 | CN | 104349285 | A | 11 February 2015 |
| | | | | CN | 104349285 | B | 03 July 2018 |
| | | | | CN | 108811079 | A | 13 November 2018 |
| | | | | CN | 108811079 | B | 22 January 2021 |
| | | | | EP | 2835915 | A2 | 11 February 2015 |
| | | | | EP | 2835915 | A3 | 01 April 2015 |
| | | | | EP | 2835915 | B1 | 06 April 2016 |
| | | | | US | 10004033 | B2 | 19 June 2018 |
| | | | | US | 2015-0036540 | A1 | 05 February 2015 |
| | | | | US | 9432925 | B2 | 30 August 2016 |
| KR | 10-1785674 | B1 | 16 October 2017 | KR | 10-2016-0054527 | A | 16 May 2016 |
| | | | | US | 2016-0277914 | A1 | 22 September 2016 |
| | | | | US | 9906937 | B2 | 27 February 2018 |
| | | | | WO | 2015-072796 | A1 | 21 May 2015 |
| KR | 10-2019-0077947 | A | 04 July 2019 | KR | 10-2477589 | B1 | 15 December 2022 |
| | | | | US | 11272425 | B2 | 08 March 2022 |
| | | | | US | 2020-0322872 | A1 | 08 October 2020 |
| | | | | WO | 2019-132151 | A1 | 04 July 2019 |

Form PCT/ISA/210 (patent family annex) (July 2022)